# EUROPEAN PATENT APPLICATION

(11) **EP 1 923 852 A1**
(43) Date of publication of application: **21.05.2008**
(21) Application number: 06797065.7
(22) Date of filing: 30.08.2006
(51) Int. Cl.: G09G 3/20, B60R 1/00, B60R 11/02, G02F 1/13, G02F 1/1335, G09G 3/36

(54) **DISPLAY DEVICE AND DISPLAY METHOD**

(30) Priority: 06.09.2005 JP 2005258496; 15.09.2005 JP 2005268207
(71) Applicant: FUJITSU TEN LIMITED, Kobe-shi Hyogo 652-8510 (JP)
(72) Inventor: HARADA, Haruo, Kobe-shi, Hyogo 652-8510 (JP); TANAKA, Shogo, Kobe-shi, Hyogo 652-8510 (JP); ENOMOTO, Ichiro, Kobe-shi, Hyogo 652-8510 (JP); KUWANO, Teruomi, Kobe-shi, Hyogo 652-8510 (JP); NAKATA, Kenji, Kobe-shi, Hyogo 652-8510 (JP); MAEKAWA, Katsuyuki, Kobe-shi, Hyogo 652-8510 (JP); MIZUNO, Yoshihisa, Kobe-shi, Hyogo 652-8510 (JP)
(74) Representative: Ward, James Norman
(86) International application number: PCT/JP2006/317092
(87) International publication number: WO 2007/029578

(57) **Abstract**

The present invention is an display apparatus including: a display portion 100 that displays individual images IM1 and IM2 on the same screen; and a display control portion 10 that adjusts image quality of the individual images IM1 and IM2 as output conditions thereof to control visible ranges of the individual images IM1 and IM2. According to the present invention, the visible ranges can be changed by adjusting the image quality of the individual images IM1 and IM2. Therefore, it is possible to optimize the visible ranges of the individual images IM1 and IM2, and improve the visibility of the images in a multi-view display without changing the configuration of the display portion 100 composed of the multi-view display.

## Description

### TECHNICAL FIELD

The present invention relates to a display apparatus such as an in-vehicle display apparatus which can display different visible images from respective different directions on a common display screen as well as a display method thereof.

### BACKGROUND ART

There has been known a so-called multi-view display which can display different visible images from respective different directions on a common (or single) display screen. For example, the multi-view display is provided with a parallax barrier in front of a liquid crystal panel. The parallax barrier sorts directions of movement of light from a backlight every one pixel, and hence different information (i.e., images) can be displayed on the right and left of the display screen (e.g. see Document 1). By mounting such a display apparatus on a vehicle, while a driver watches a navigation image, a passenger of a front passenger's seat can watch other image such as a television program,
Document 1: Japanese Patent Application Publication No. 2005-78080

### DISCLOSURE OF THE INVENTION

### PROBLEMS TO BE SOLVED BY THE INVENTION

In the above-mentioned display apparatus, a so-called crosstalk that the both of right and left images mix occurs according to a direction from which the display screen is watched. For example, while the driver watches the navigation image, when the TV image of the front passenger's seat side leaks out to the driver's seat side and overlaps with the navigation image, there is a possibility that the driver cannot distinguish navigation information clearly.
Since a position where the above-mentioned crosstalk occurs changes depending on brightness of a display image, the image of the front passenger's seat side may overlap with the image which an observer of the driver's seat side observes by the changes of the display image.
To solve the above-mentioned problems, it can be considered that an occurrence range and a direction of the crosstalk are positively adjusted by installing an adjustment mechanism consisted of hardware for adjusting a position of the parallax barrier in the display apparatus.
However, when the adjustment mechanism adjusting the position of the parallax barrier is installed in the display apparatus, there are problems that the costs of the display apparatus increase, and the hardware configuration of the display apparatus becomes complicated and large scaled.

The present invention has been made in view of the above described problems, and it is an object of the present invention to provide a display apparatus which can display different visible images from respective different directions on a common display screen, improve the visibility of the images by optimizing at least one of visible ranges of the images without installing the adjustment mechanism having particular hardware configuration, and be designed compact in size at low costs, as well as a display method thereof.

### MEANS FOR SOLVING THE PROBLEMS

A display apparatus in accordance with the present invention is characterized by comprising: display means that displays individual images for two or more visible ranges on the same screen; and display control means that adjusts an output condition of a single individual image to control a visible range of the single individual image.
With this configuration, the visible range of the single individual image can be controlled without changing the configuration of the display means.

In the above configuration, there may be employed a configuration such that the display control means adjusts the image quality of the single individual image as the output condition of the single individual image.

In the above configuration, there may be employed a configuration such that the display control means controls the visible range of the single individual image so that the visible range of the single individual image is maintained to uniformity according to brightness of surroundings of the display means.

In the above configuration, there may be employed a configuration such that the display control means controls the visible range of the single individual image so that the visible range of the single individual image becomes wider than the visible range of another individual image.

In the above configuration, there may be employed a configuration such that the display control means adjusts the image quality of the single individual image together with the visible range of the another individual image.

In the above configuration, there may be employed a configuration such that, when the image quality of the single individual image is adjusted, the display control means adjusts the image quality of the another individual image so that the visible range of the another individual image maintains a state before adjustment of the image quality of the single individual image.

In the above configuration, there may be employed a configuration such that the display control means adjusts at least one of brightness, contrast, color tone, and gamma value as the adjustment of the image quality.

In the above configuration, there may be employed a configuration such that the display control means controls the visible range according to an instruction input from the outside.

In the above configuration, there may be employed a configuration such that the display control means adjusts the image quality according to a type of a supply source supplying the single individual image.

In the above configuration, there may be employed a configuration such that the display control means displays the visible range of the single individual image on the display means.

In the above configuration, there may be employed a configuration, which further comprises detection means that detects brightness of surroundings of the display means, such that the display control means controls the image quality or display form of the single individual image as a output state based on the detection results of the detection means, when supply sources supplying the single individual image and the another individual image are the same, the display control means executes the adjustment of the image quality of the single individual image or change of the display form of the single individual image based on the detection results of the detection means, and when the supply sources supplying the single individual image and the another individual image are different, the display control means does not execute the adjustment of the image quality of the single individual image or change of the display form of the single individual image based on the detection results of the detection means.

In the above configuration, there may be employed a configuration such that the detection means detects the brightness of surroundings of the display means based on an operation state of a illumination switch controlling illuminations of a vehicle.

In the above configuration, there may be employed a configuration such that, when the illumination switch is turned off, the display control means sets the single individual image to brightness for daytime display, when the illumination switch is turned on, and the supply sources supplying the single individual image and the another individual image are the same, the display control means sets the single individual image to brightness for nighttime display, and when the illumination switch is turned on, and the supply sources supplying the single individual image and the another individual image are different, the display control means sets the single individual image to brightness for daytime display.

In the above configuration, there may be employed a configuration such that, when the supply sources supplying the single individual image and the another individual image are a navigation apparatus, the display control means switches the single individual image back and forth between a navigation image for dark time and a navigation image for bright time, based on the detection results of the detection means, and when the supply source supplying the single individual image is the navigation apparatus, and the supply source supplying the another individual image is other apparatus other than the navigation apparatus, the display control means does not execute the change of the display form of the single individual image based on the detection results of the detection means.

In a display method of a display apparatus according to the present invention, there may be employed a configuration comprising the steps of: displaying individual images for two or more visible ranges on the same screen; and adjusting an output condition of the single individual image to control the visible range of the single individual image.

In the above configuration, there may be employed a configuration such that the image quality of the single individual image is adjusted as the output condition of the single individual image.

In the above configuration, there may be employed a configuration, which comprises a step of detecting brightness of surroundings of display means, such that when supply sources supplying the single individual image and the another individual image are the same, adjustment of the image quality of the single individual image or change of the display form of the single individual image is executed as the output condition of the single individual image, based on the detected brightness, and when the supply sources supplying the single individual image and the another individual image are different, adjustment of the image quality of the single individual image or change of the display form of the single individual image is not executed as the output condition of the single individual image, based on the detected brightness.

### EFFECTS OF THE INVENTION

According to the present invention, in a display apparatus such as an in-vehicle display apparatus which can display different visible images from respective different directions on a common display screen, it is possible to optimize visible ranges of the images, and improve the visibility of the images.
Moreover, according to the present invention, in a display apparatus such as an in-vehicle display apparatus which can display different visible images from respective different directions on a common display screen, the increase of a crosstalk caused by adjustment of the brightness of display images according to the brightness of the inside of a vehicle or the turning on/off of an illumination switch of head lamps and so on can be suppressed at the minimum.

### BRIEF DESCRIPTION OF THE DRAWINGS

Preferred exemplary embodiments of the present invention will be described in detail with reference to the following drawings, wherein:
FIG. 1 is a view illustrating a basic configuration of a display apparatus in accordance with an embodiment of the present invention;
FIG. 2 is a perspective view showing the appearance of the display apparatus;
FIG. 3 is a perspective view showing an example in which the display apparatus is applied to a vehicle;
FIG. 4 is a functional block diagram of a configuration of the display apparatus;
FIG. 5 is a functional block diagram showing a configuration of a controller;
FIG. 6 is a functional block diagram of first and second image quality adjusting circuits;
FIG. 7 is a functional block diagram of a configuration of an image outputting portion;
FIG. 8 is a view illustrating a cross-sectional configuration of a display portion;
FIG. 9 is a front view of a liquid crystal panel;
FIG. 10 is a circuit diagram of a TFT substrate;
FIG. 11 is a view describing the principles of operation of liquid crystal;
FIG. 12 is a view describing a function of the liquid crystal as a shutter;
FIG. 13A is a graph showing a relationship in each brightness between an observation angle of a display screen in the display portion and the intensity of light to pass through display pixels of the driver's seat side;
FIG. 13B is a graph showing a relationship between an observation angle of a display screen in the display portion and the intensity of light to pass through display pixels of the front passenger's seat side, which is overlapped with the relationship of FIG. 13A;
FIG. 14 is a view describing a relationship between a crosstalk area and visible ranges;
FIG. 15 is a view describing a method for expanding the visible range of the driver's seat side;
FIG. 16 is a view describing a method for expanding the visible range of the front passenger's seat side;
FIG. 17 is a graph showing a brightness change of an image before and after adjustment by a brightness adjusting portion;
FIG. 18 is a graph showing a brightness change of an image before and after adjustment by a contrast adjusting portion;
FIG. 19 is a graph showing a brightness change of an image before and after adjustment by a gamma value adjusting portion;
FIG. 20 is a graph showing a brightness change of an image before and after adjustment by a color tone adjusting portion;
FIG. 21 is a flowchart showing an example of an initialization process of the visible ranges by the controller;
FIG. 22 is a view describing visible ranges at the time of the initialization;
FIG. 23 is a view showing an example of a setting screen to set visible ranges by manual operation;
FIG. 24 is a view describing an example of data memorized in a memory;
FIG. 25 is a view describing a setting value of a viewing angle;
FIG. 26 is a view showing an example of setting values for the brightness adjustment of the driver's seat side and the front passenger's seat side set in accordance with the viewing angle;
FIG. 27 is a flowchart showing an example of a viewing angle control process by the controller;
FIG. 28 is a flowchart showing another example of the viewing angle control process by the controller;
FIG. 29 is a view describing an example of the viewing angle control when a mobile parallax barrier is used;
FIG. 30 is a view showing an example of a system configuration when viewing angle control data is generated based on vehicle information, and image quality adjustment is executed based on the generated viewing angle control data;
FIG. 31 is a view describing another example of the image quality adjustment for the viewing angle control;
FIG. 32 is a flowchart showing an example of a brightness change process by the controller of the display apparatus in accordance with another embodiment of the present invention; and
FIGs. 33A and 33B are views showing examples of images for day and night.

### BEST MODE FOR CARRYING OUT THE INVENTION

A description will now be given, with reference to the accompanying drawings, of best modes for carrying out the invention.

### (First exemplary embodiment)

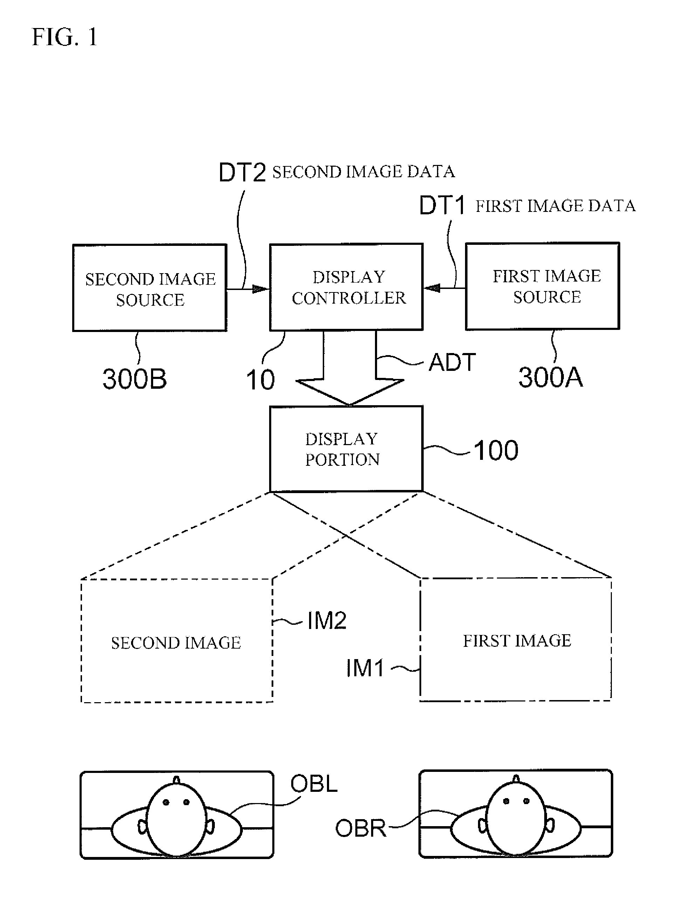

FIG. 1 is a view illustrating a basic configuration of a display apparatus in accordance with a first exemplary embodiment of the present invention.
Referring now to FIG. 1, the display apparatus includes a display controller 10 that serves as a display control means, and a display portion 100 as display means. To the display controller 10, image data DT1 is supplied from a first image source 300A that servers as a supply source, and at the same time, image data DT2 is also supplied from a second image source 300B that servers as a supply source. Then, image data ADT, which is composed of the first image data DT1 and the second image data DT2, is output to the common display portion 100. The configuration of the display controller 10 will be described later in detail.
The first image source 300A and the second image source 300B are respectively composed of a camera, TV receiver, DVD reproducing portion, HD reproducing portion, navigation portion, and the like, as will be described later.

The display portion 100 includes: a liquid crystal panel; a backlight; a parallax barrier; and the like, as will also be described later. A first image IM1 based on the first image data DT1 and a second image IM2 based on the second image data DT2 are displayed on a common display screen so that an observer OBR can watch the first image IM1 from a right-hand direction and an observer OBL can watch the second image IM2 from a left-hand direction. The configuration of the display portion 100 will also be described later in detail.

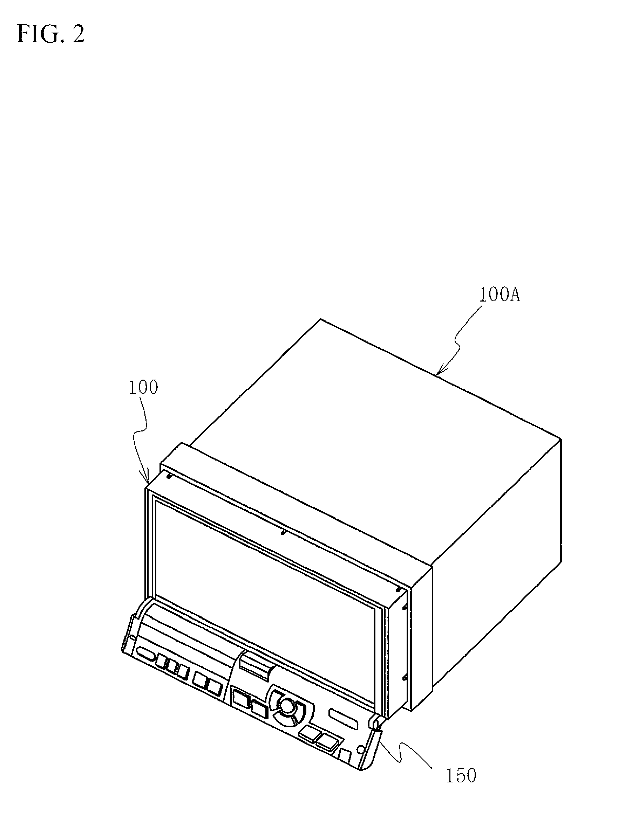

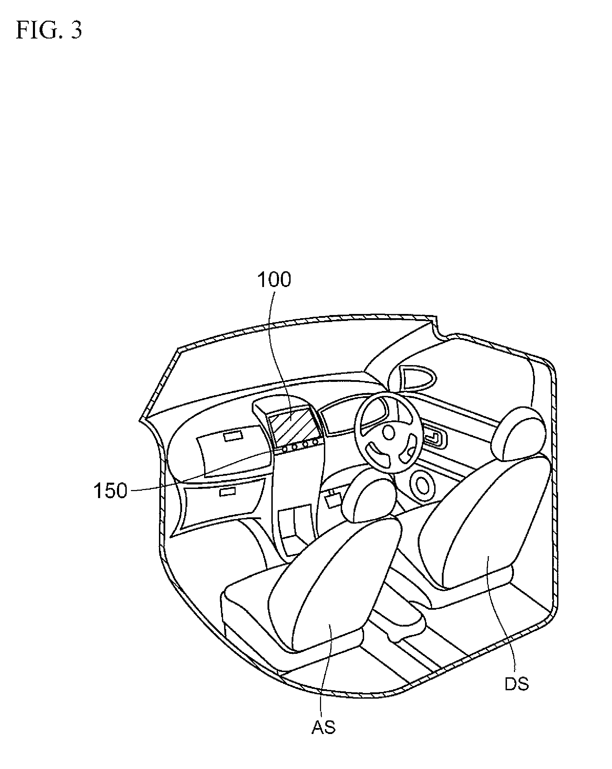

FIG. 2 is a perspective view showing the appearance of an in-vehicle display apparatus in accordance with the first exemplary embodiment of the present invention, and FIG. 3 is a perspective view showing an example in which the display apparatus is applied to a vehicle in accordance with the first exemplary embodiment of the present invention.
Referring now to FIG. 2, a main body 100A of the in-vehicle display apparatus is built into a dashboard area of the vehicle, and as shown in FIG. 3, the display portion 100 is arranged between a driver's seat DS and a front passenger's seat AS.
Referring now to FIG. 3, the display portion 100 is arranged between the driver's seat DS and the front passenger's seat AS in the dashboard area of the vehicle. In addition, as shown in FIGs. 2 and 3, the display portion 100 is provided with the operation portion 150 so as to manually operate the display apparatus.
According to an exemplary embodiment shown in FIG. 3, a passenger who sits on the driver's seat DS corresponds to the above-described observer OBR, and another passenger who sits on the front passenger's seat AS corresponds to the above-described observer OBL. Those passengers are able to simultaneously watch individual images, namely, the first image IM1 and the second image IM2, which are respectively different and displayed on the display portion 100, from the driver's seat DS and from the front passenger's seat AS.

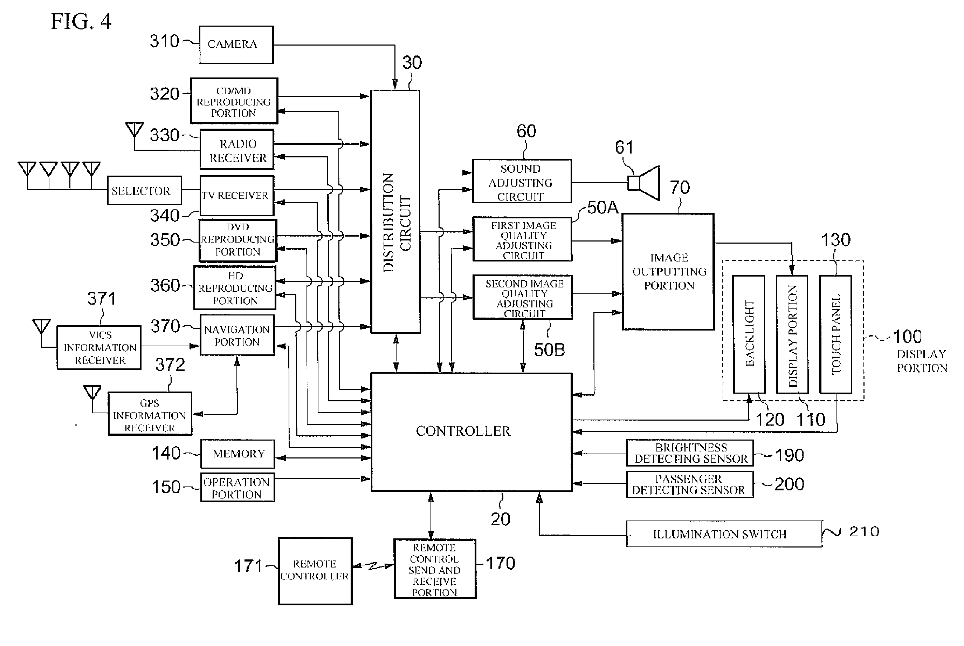

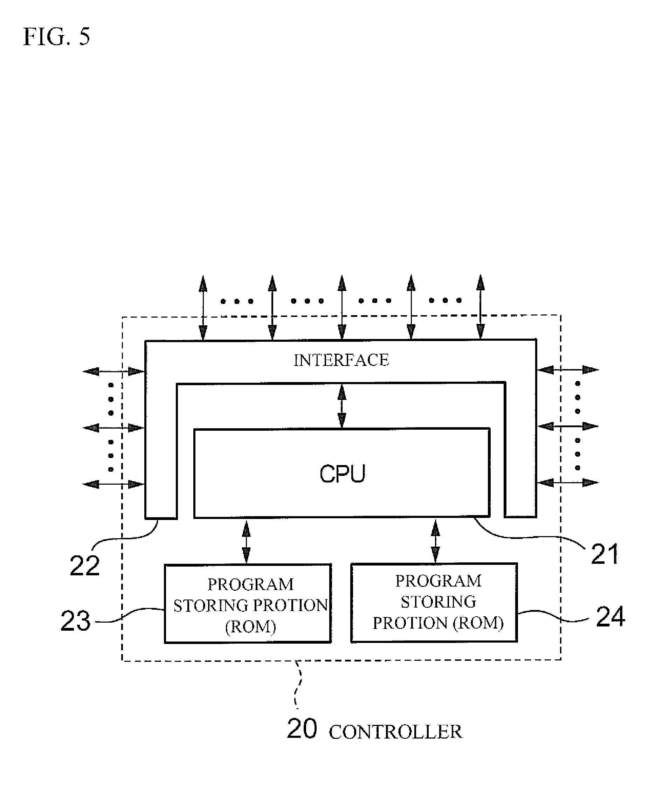

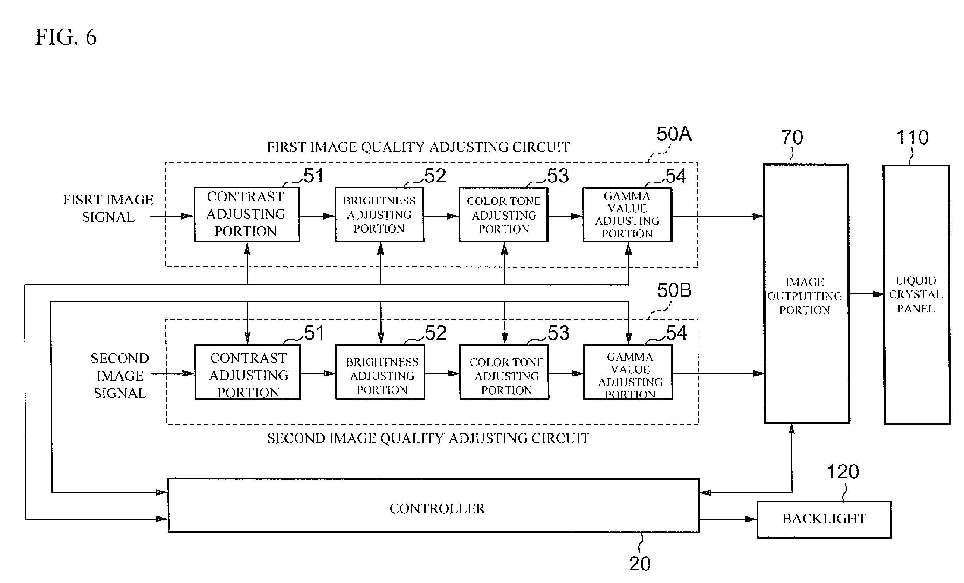

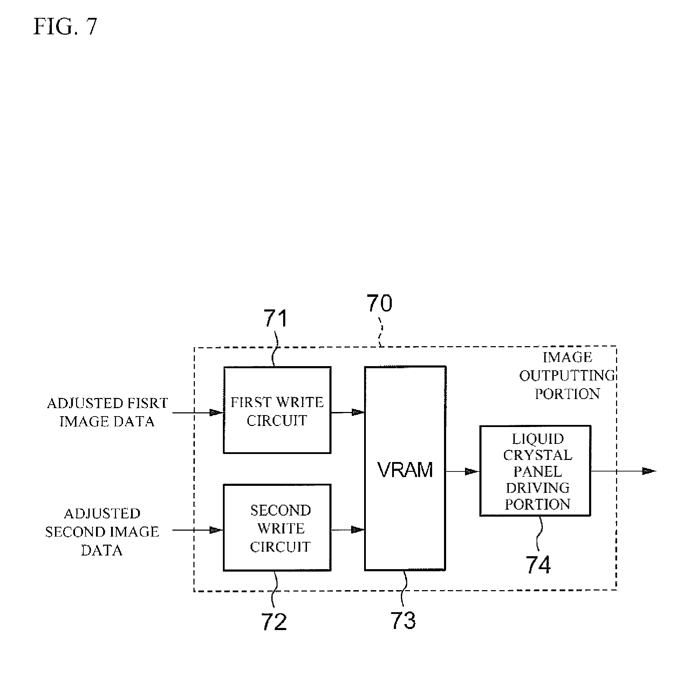

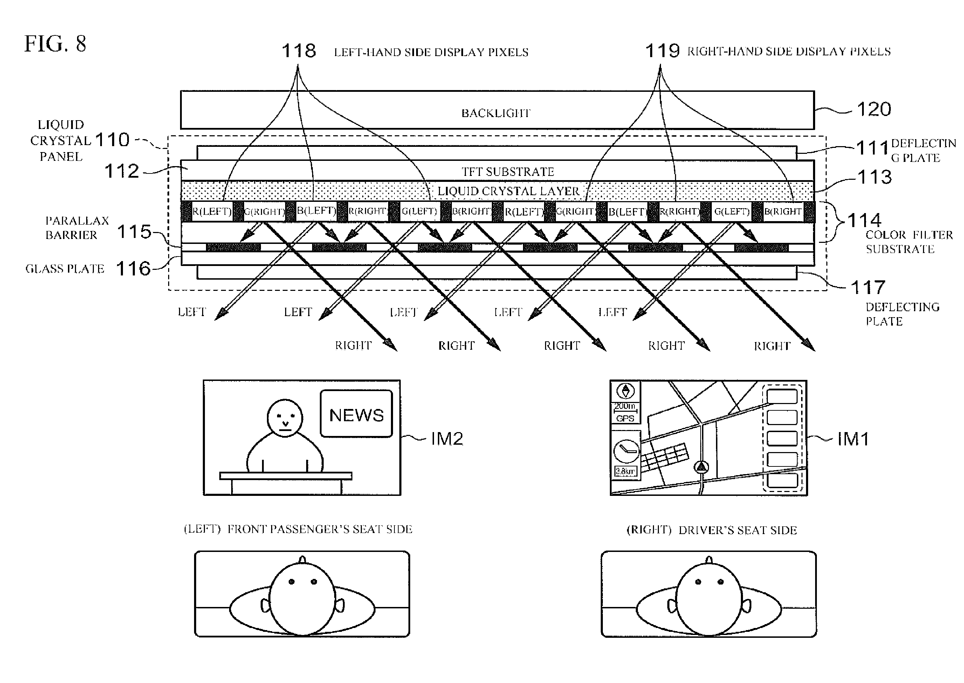

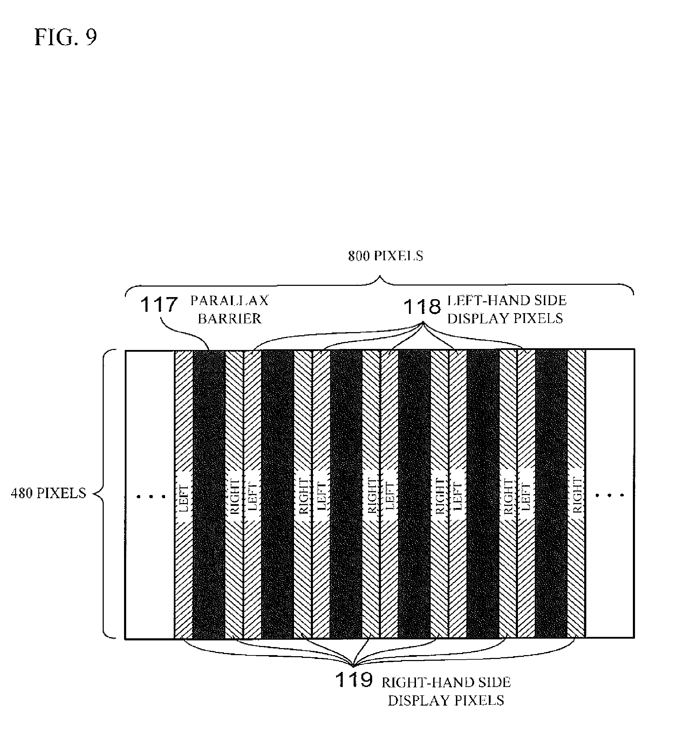

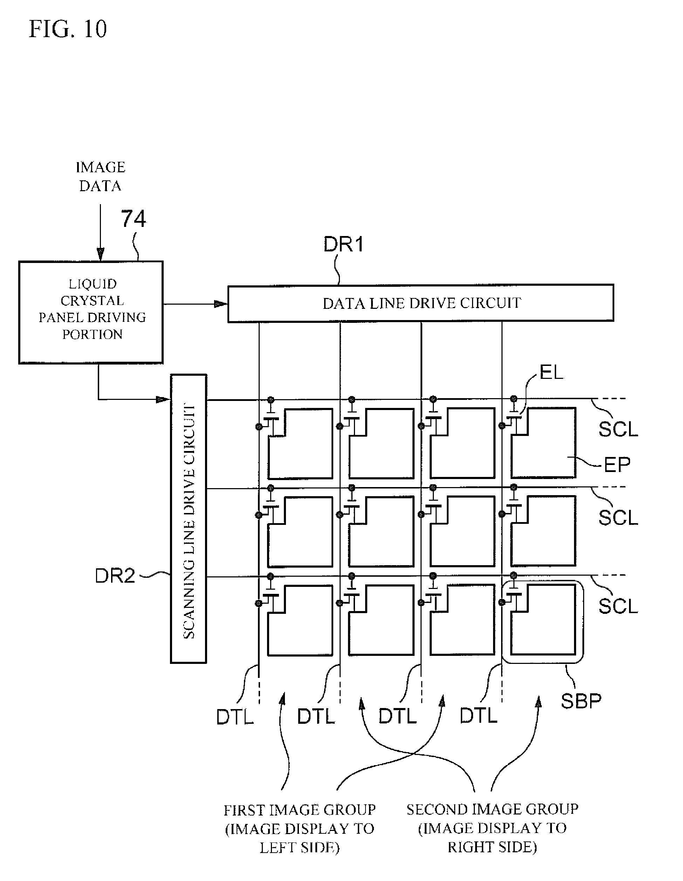

FIG. 4 through FIG. 10 illustrate specific configurations of the display apparatus in accordance with the first exemplary embodiment of the present invention. FIG. 4 is a functional block diagram of the display apparatus. FIG. 5 is a functional block diagram showing a configuration of the controller. FIG. 6 is a functional block diagram of first and second image quality adjusting circuits. FIG. 7 is a functional block diagram of an image outputting portion. FIG. 8 is a view illustrating a cross-sectional configuration and effects of a liquid crystal panel. FIG. 9 is a front view of the liquid crystal panel. FIG. 10 is a circuit diagram of a TFT substrate.

Referring now to FIG. 4, the display apparatus includes the display portion 100, a controller 20, a distribution circuit 30, a first image quality adjusting circuit 50A, a second image quality adjusting circuit 50B, an image outputting portion 70, and the like. The display controller 10 includes the controller 20, the distribution circuit 30, the first image quality adjusting circuit 50A, the second image quality adjusting circuit 508, the image outputting portion 70, and the like.

Referring now to FIG. 5, the controller 20 includes a processor (CPU) 21, an interface 22, a ROM 23, a RAM 24, and the like. The controller 20 controls the display apparatus according to a program stored in the ROM 23 in a comprehensive manner. Also, the controller 20 controls a visible range of the first image IM1 and a visible range of the second image IM2, which are separated from each other by superimposing the first image IM1 and the second image IM2 to be displayed on the display portion 100, by adjusting the image quality of at least one of the first image IM1 and the second image IM2 to have a given range.

The controller 20 is connected to a camera 310, a compact disc/mini disc (CD/MD) reproducing portion 320, a radio receiver 330, a TV receiver 340, a digital versatile disc (DVD) reproducing portion 350, a hard disc (HD) reproducing portion 360, a navigation portion 370, and the like, which are mounted on a vehicle and respectively serve as supply sources supplying images and sounds, as illustrated in FIG. 4. The controller 20 sends and receives data to/from the afore-described components, and controls them. The camera 310 captures images of surroundings and the like of the vehicle. The CD/MD reproducing portion 320 reproduces music or images. The radio receiver 330 receives radio waves via an antenna. The TV receiver 340 receives TV waves via an antenna through a selector 341. The DVD reproducing portion 350 reproduces music information and images in a DVD. The HD reproducing portion 360 reproduces images and music information stored in a HD. The navigation portion 370 outputs maps or route guide images on the basis of road information received by a VICS information receiver 371 and geographic information received by a GPS information receiver 372. Additionally, the controller 20 is also connected to an external memory 140, the operation portion 150, a remote control send and receive portion 170, a brightness detecting sensor 190, a illumination switch 210, a passenger detecting sensor 200, and the like, and enables various controls on the basis of various kinds of data obtained from the afore-mentioned components. The external memory 140 stores various kinds of data. The operation portion 150 is provided for operating the display apparatus. The remote control send and receive portion 170 sends and receives infrared signals or wireless signals between a remote controller 171 provided for controlling the display apparatus remotely. The brightness detecting sensor 190 is composed of a light switch or a light sensor to detect the brightness inside the vehicle. The illumination switch 210 lets illuminations of head lamps of the vehicle turn on/off. The passenger detecting sensor 200 is composed of a pressure-sensitive sensor or the like on the driver's seat or the front passenger's seat to detect a passenger in the vehicle.

The distribution circuit 30, as illustrated in FIG. 4, distributes sound data and image data supplied from the above-described camera 310, the CD/MD reproducing portion 320, the radio receiver 330, the TV receiver 340, the DVD reproducing portion 350, the HD reproducing portion 360, the navigation portion 370, and the like, to a sound adjusting circuit 60, the first image quality adjusting circuit 50A or the second image quality adjusting circuit 50B, according to a control instruction issued by the controller 20.

The sound adjusting circuit 60 adjusts the sound data supplied from the distribution circuit 30 to output to a speaker 61, as illustrated in FIG. 4.

The first image quality adjusting circuit 50A and the second image quality adjusting circuit 50B, by reference to FIG. 6, include a contrast adjusting portion 51, a brightness adjusting portion 52, a color tone adjusting portion 53, a gamma value adjusting portion 54, and the like, respectively, and adjust the image qualities (contrast, brightness, color tone, and gamma value) of the first image data and the second image data, respectively, in response to the control instruction issued by the controller 20.

Referring now to FIG. 7, the image outputting portion 70 includes a first write circuit 71, a second write circuit 72, a video RAM (VRAM) 73, a liquid crystal panel driving portion 74, and the like. The first image data and the second image data, image qualities of which have respectively been adjusted by the first image quality adjusting circuit 50A and the second image quality adjusting circuit 50B, are respectively written into the first write circuit 71 and the second write circuit 72. The first write circuit 71 and the second write circuit 72 respectively write the first image data and the second image data, the image qualities of which are respectively adjusted by the first image quality adjusting circuit 50A and the second image quality adjusting circuit 50B, into given addresses of the VRAM 73, in order to superimpose such adjusted first image data and such adjusted second image data.
The VRAM 73 retains the image data on which the first image data and the second image data are superimposed. Such superimposed image data corresponds to respective pixels of the display portion 100. The liquid crystal panel driving portion 74 is a circuit that drives a liquid crystal panel 110, and also drives the corresponding pixels of the liquid crystal panel 110, on the basis of the superimposed image data retained in the VRAM 73. The liquid crystal panel 110 will be described later in detail.

The display portion 100 includes: the liquid crystal panel 110; a backlight 120; a touch panel 130; and the like, as illustrated in FIG. 4. The backlight 120 sheds illuminated lights from the back surface of the liquid crystal panel 110. The touch panel 130 is provided for inputting a signal to operate the display apparatus. Here, the touch panel 130 is not shown, yet is formed in a shape of transparent sheet and adhered to the front surface of the liquid crystal panel 110.

Referring now to FIG. 8, the liquid crystal panel 110 has a well-known structure. Sequentially from the backlight 120, there are provided a first deflecting plate 111, a thin film transistor (TFT) substrate 112, a liquid crystal layer 113, a color filter substrate 114 having pixels for three primary colors of RGB, a parallax barrier 115, a glass plate 116, a second deflecting plate 117, and the like.
The above-described liquid crystal panel 110 has a display screen in which, for example, 800 pixels are arranged in a horizontal direction and 480 pixels in a vertical direction, as illustrated in FIG. 8 and FIG. 9. Also, left-hand side display pixels 118 (hereinafter, also referred to as front passenger's display pixel 118) and right-hand side display pixels 119 (hereinafter, also referred to as driver's display pixel 119) are alternately arranged in a horizontal direction of the display screen.

The parallax barrier 115 is formed in a stripe-shaped manner, and includes shielding portions and transmitting portions, as illustrated in FIG. 8 and FIG. 9. The shielding portions are arranged between the left-hand side display pixels 118 and the adjacent right-hand side display pixels 119. By providing the parallax barrier 115 on the front surface of the color filter substrate 114, among the illuminated lights that have passed through the left-hand side display pixels 118, only the lights going towards the left side selectively pass through the transmitting portions of the parallax barrier 115. Among the illuminated lights that have passed through the right-hand side display pixels 119, only the lights going towards the right side selectively pass through the transmitting portions of the parallax barrier 115. This makes the first image IM1 visible from the right side (the driver's seat) of the liquid crystal panel 110, and also makes the second image IM2 visible from the left side (the front passenger's side), as illustrated in FIG. 8.
Here, a similar parallax barrier as disclosed in Japanese Patent Application Publication No. 10-123461 or Japanese Patent Application Publication No. 11-84131 may be employed for the parallax barrier 115.

The TFT substrate 112, by reference to FIG. 10, includes a data line drive circuit DR1, a scanning line drive circuit DR2, vertically arranged scanning lines SCL, horizontally arranged data lines DTL, TFT elements EL, pixel electrodes EP corresponding to the TFT elements EL, and the like, whereas each of the TFT elements EL is formed in each region where each of the scanning lines SCL and each of the data lines DTL are crossed. Sub pixels SBP are formed by regions surrounded by the scanning lines SCL and the data lines DTL, and the sub pixels SBP arranged along each of the data lines DTL are alternately assigned to the left-hand side display pixels 118 and the right-hand side display pixels 119.
A drive timing of the data line drive circuit DR1 is controlled by the liquid crystal panel driving portion 74 to control a voltage applied to the pixel electrode EP.
A drive timing of the scanning line drive circuit DR2 is controlled by the liquid crystal panel driving portion 74 to selectively scan the TFT element EL.

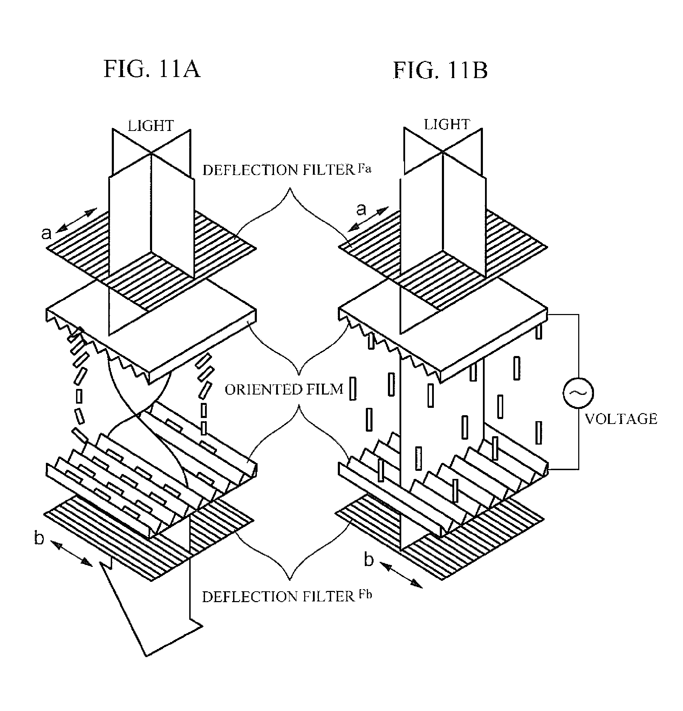

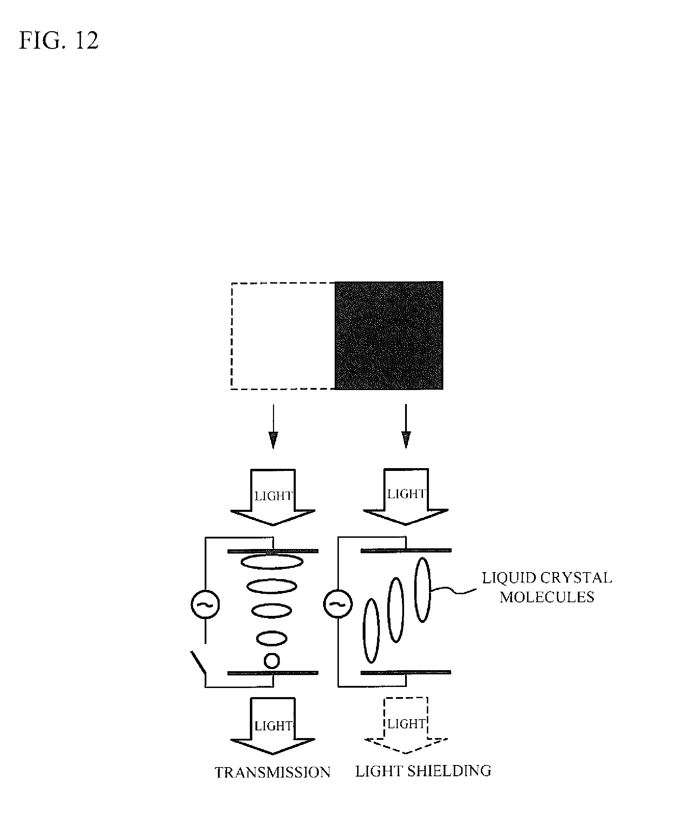

Here, a description will now be given, with reference to FIGs. 11A, 11B and 12, of the principles of driving a TN (Twisted Nematic) type liquid crystal as an example of liquid crystal. As shown in FIG. 11A, in the TN type liquid crystal, twisted liquid crystal is interposed between two deflection filters Fa and Fb (deflection plates) arranged to have mutually orthogonal deflecting directions for preventing light from pass therethrough. Incident light to top of the liquid crystal is guided by the liquid crystal helix and is twisted by 90 degrees. Thus, the light is allowed to pass through the lower deflection filter Fb. As shown in FIG. 11B, when a voltage is applied to the liquid crystal molecules, the molecules are caused to stand upright and are released from the twisted state. Thus, the incident light goes downwards without any change, and is prevented from passing through the lower filter Fb. That is, as shown in FIG. 12, light is allowed to pass through the liquid crystal when no voltage is applied to the liquid crystal molecules, and is blocked so that the screen is black when the voltage is applied. The liquid crystal functions as a shutter responsive to the voltage applied thereto. Thus, brightness control can be implemented by controlling the voltage applied to the liquid crystal. Further, brightness control of images on the left-side and right-side display portions can be implemented independently by separately controlling the voltages applied to liquid crystals respectively for the left-side and right-side display images.

The memory 140 may be formed by an electrically programmable and erasable memory such as a flash memory or a battery-backup volatile memory, and stores data necessary for control by the controller 20. More specifically, the memory 140 stores setting information for setting visible ranges that will be described later, and vehicle information about the steering wheel position of the vehicle.

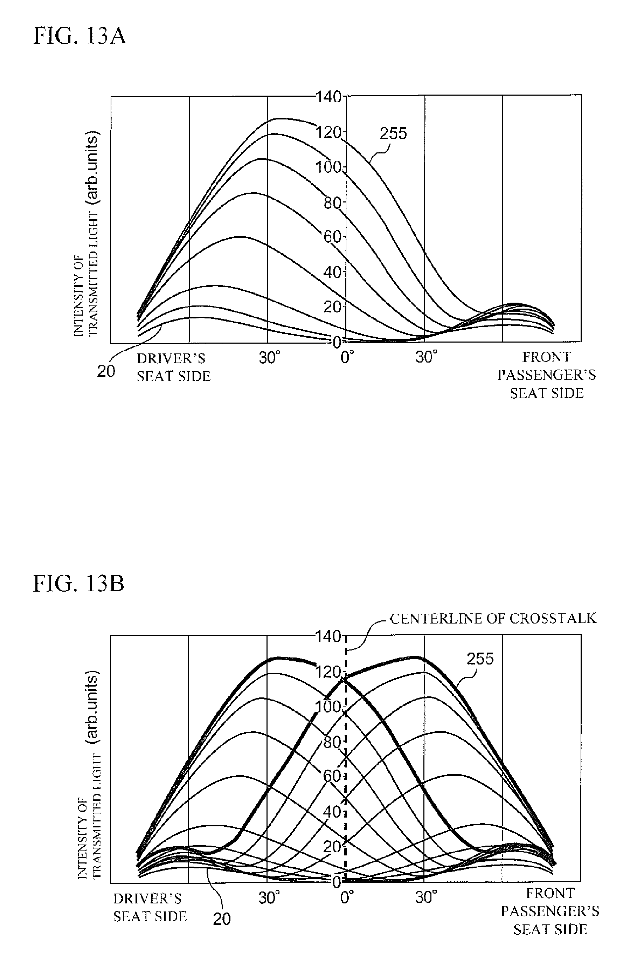

A description will be given, with reference to FIG. 13 through FIG. 16, of control method of the visible ranges of the above-described first image IM1 and second image IM2.
Here, FIG. 13A is a graph showing the relationship in each brightness between an observation angle of the display screen in the display portion and the intensity of light to pass through the driver's display pixel 119, and FIG. 13B is a graph showing the relationship between an observation angle of a display screen in the display portion and the intensity of light to pass through the front passenger's display pixels 118, which is overlapped with the relationship of FIG. 13A.

The light passing through the driver's display pixel 119, as shown in FIG. 13A, is distributed over not only the driver's seat side but also the front passenger's seat side regardless of the presence of the parallax barrier 115. A direction in which the maximal brightness is observed changes depending on the brightness level of the image. For instance, when the brightness level of the image is "255", the direction in which the maximal brightness is observed is approximately 30 degrees of the driver's seat side (right side). This angle is a value prescribed by the arrangement of the parallax barrier 115. It should be noted that such a characteristic of the light passing through the driver's display pixel 119 is similar to that of the front passenger's display pixels 118.
Thus, as shown in FIG. 13B, the lights passing through the driver's display pixel 119 and the front passenger's display pixels 118, respectively, are overlapped with each other, and distributed over the driver's seat side and the front passenger's seat side. For this reason, in an area where a difference between the brightness of the image displayed on the front passenger's display pixels 118 and the brightness of the image displayed on the driver's display pixel 119 is small, a crosstalk in which the first image IM1 (hereinafter, also referred to as driver's seat side image IM1) and the second image IM2 (hereinafter, also referred to as front passenger's seat side image IM2) are overlapped and observed occurs. The centerline of the crosstalk, as shown in FIG. 13B, is located in a direction perpendicular to the display screen (i.e., direction of zero degree) if the brightness of an image of the left side (front passenger's seat side) and the image of the right side (driver's seat side) is equal.

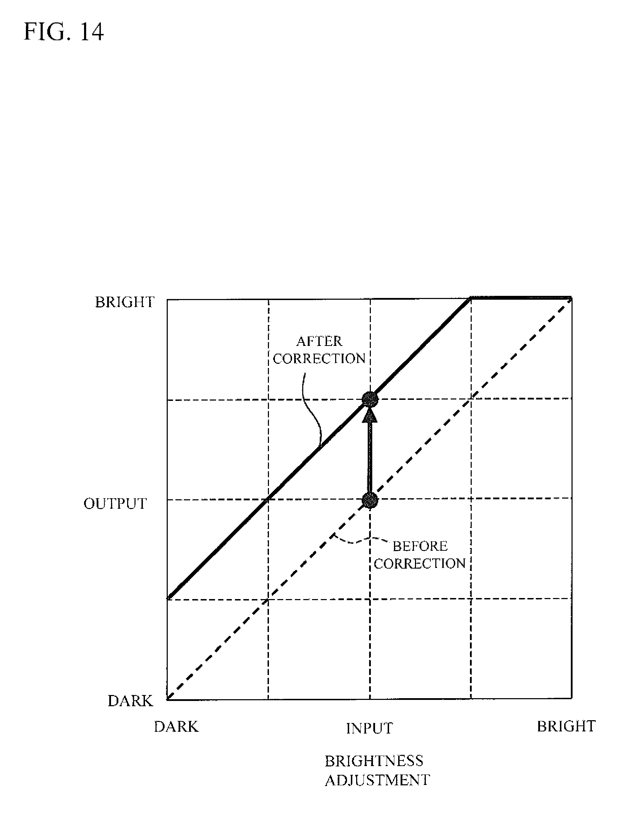

FIG. 14 is a view describing the relationship between a crosstalk area and visible ranges.
When the brightness (e.g. "255") of the driver's seat side image IM1 and the front passenger's seat side image IM2 is equal, in the display portion 100, as shown in FIG. 14, a crosstalk area CR is formed in symmetry with respect to the direction perpendicular to the display screen, and visible ranges K1 and K2 are formed at both sides of the crosstalk area CR.
Here, the crosstalk area CR is the area where a difference between the brightness of the driver's seat side image IM1 and the front passenger's seat side image IM2 is small, and in the area, the driver's seat side image IM1 and the front passenger's seat side image IM2 are overlapped and observed.
The visible range K1 is an area where a difference between the brightness of the driver's seat side image IM1 and the front passenger's seat side image IM2 is relatively large, and a range where the driver's seat side image IM1 can be clearly observed.
The visible range K2 is an area where a difference between the brightness of the driver's seat side image IM1 and the front passenger's seat side image IM2 is relatively large, and a range where the front passenger's seat side image IM2 can be clearly observed.
Two visible ranges K1 and K2 are separated from each other by the crosstalk area CR, but there are not borders delimiting the visible ranges K1 and K2, and the crosstalk area CR definitely.

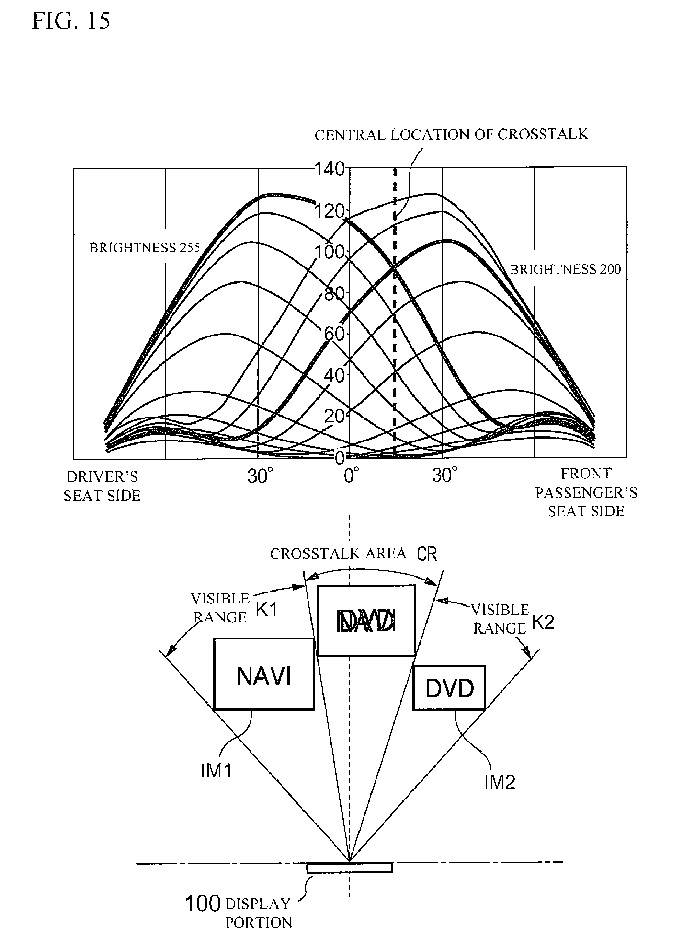

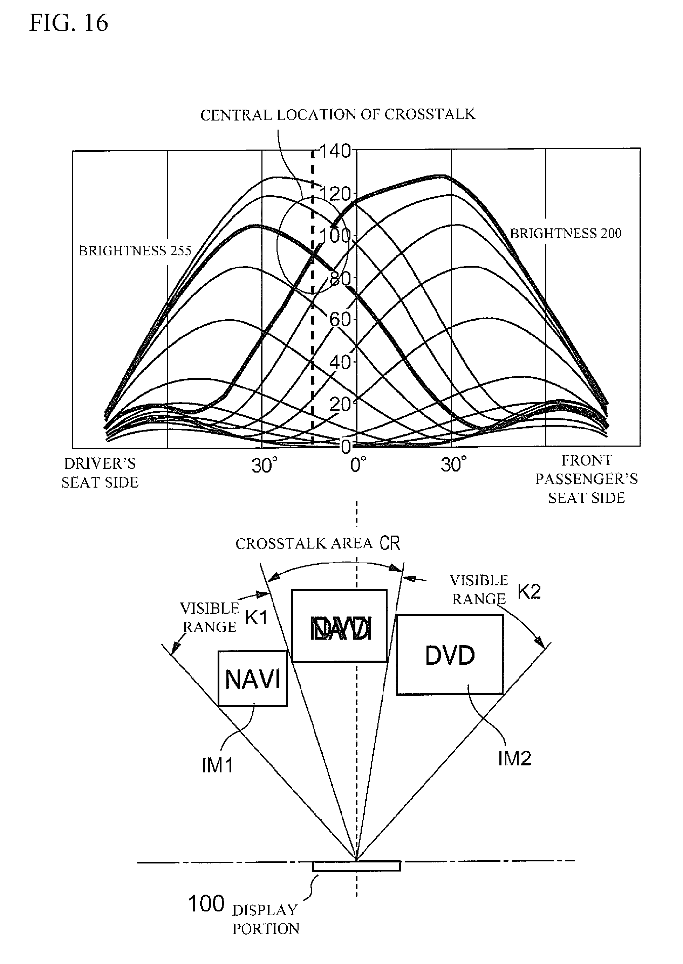

In the first exemplary embodiment, in order to change the visible ranges K1 and K2 or hold them constant, at least one of image qualities of the driver's seat side image IM1 and the front passenger's seat side image IM2 is adjusted. That is, by adjusting relationship between the image quality of the driver's seat side image IM1 and the image quality of the front passenger's seat side image IM2, relationship between the brightness (luminance) of the driver's seat side image IM1 and the brightness (luminance) of the front passenger's seat side image IM2 is adjusted.
Specifically, when the visible range K1 is widened and the visible range K2 is narrowed, as shown in FIG. 15, for instance, the brightness of the driver's seat side image IM1 is maintained to "255" and the brightness of the front passenger's seat side image IM2 is lowered to "200", which allow the values of the maximal brightness of both images to be different. Therefore, the central location of the crosstalk area CR moves to the front passenger's seat side, so that the visible range K1 spreads and the visible range K2 gets narrow.
When the visible range K2 is widened and the visible range K1 is narrowed, as shown in FIG. 16, for instance, the brightness of the driver's seat side image IM1 is lowered to "200" and the brightness of the front passenger's seat side image IM2 is maintained to "255", which allow the values of the maximal brightness of both images to be different. Therefore, the central location of the crosstalk area CR moves to the driver's seat side, so that the visible range K2 spreads and the visible range K1 gets narrow.
Although one of the brightness of the driver's seat side image IM1 and the front passenger's seat side image IM2 is changed, and the visible ranges K1 and K2 are controlled, the brightness adjustment (image quality adjustment) of another image may be executed in response to that of one image, or the brightness of one image may not be lowered, but be heightened. The adjustment procedure of the brightness (image quality) can be changed accordingly.

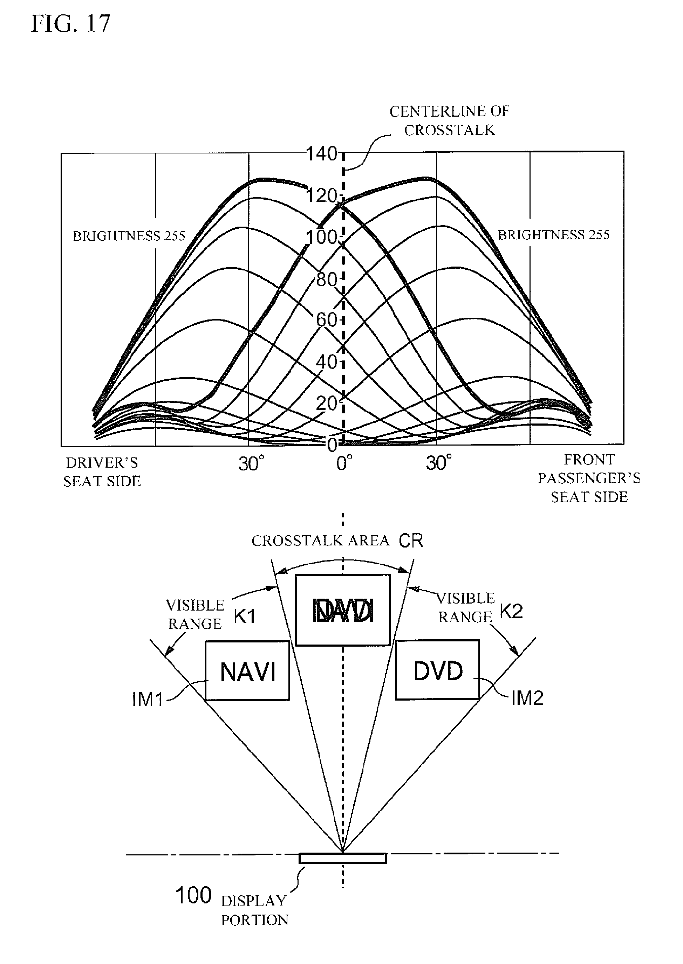

Next, a description will be given, with reference to FIG. 17 through FIG. 20, of relationship between the image quality adjustment and the brightness (luminance) of the driver's seat side image IM1 or the front passenger's seat side image IM2.

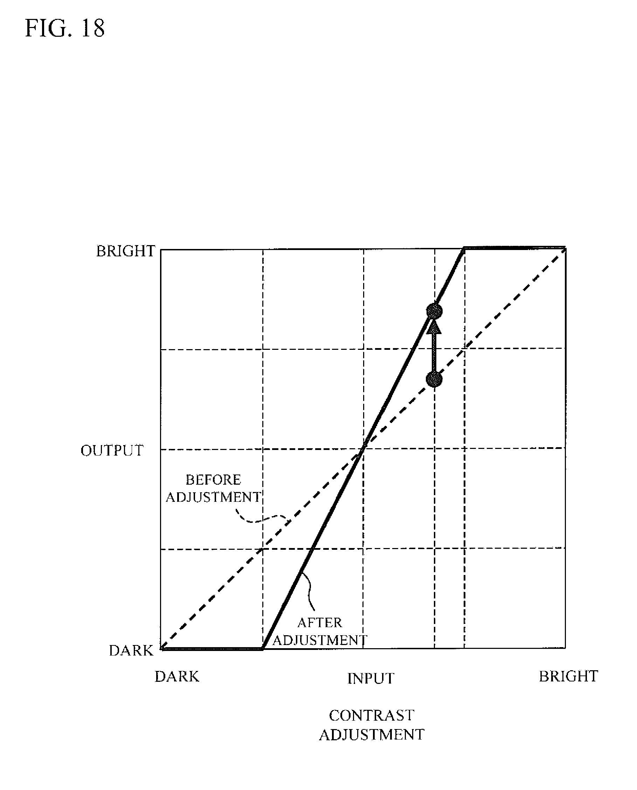

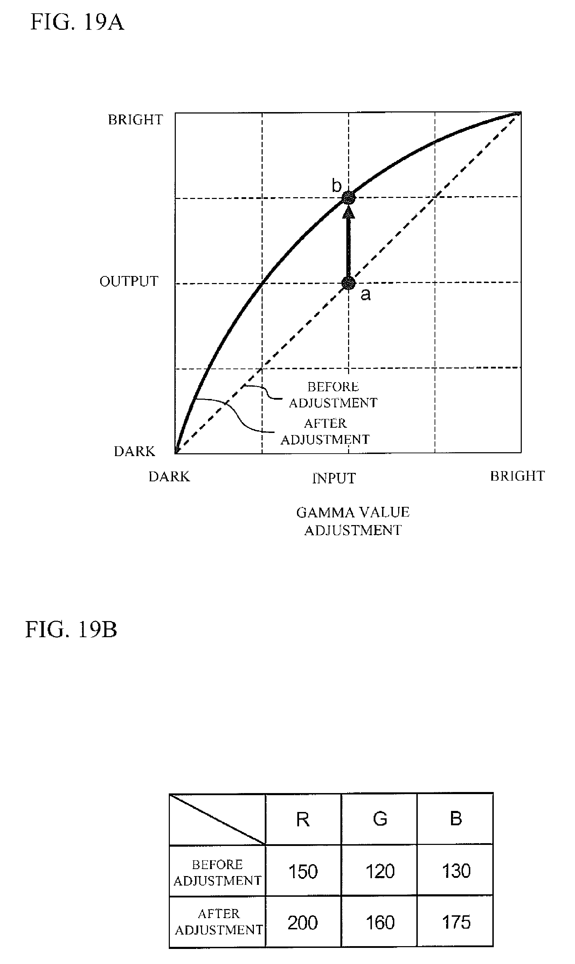

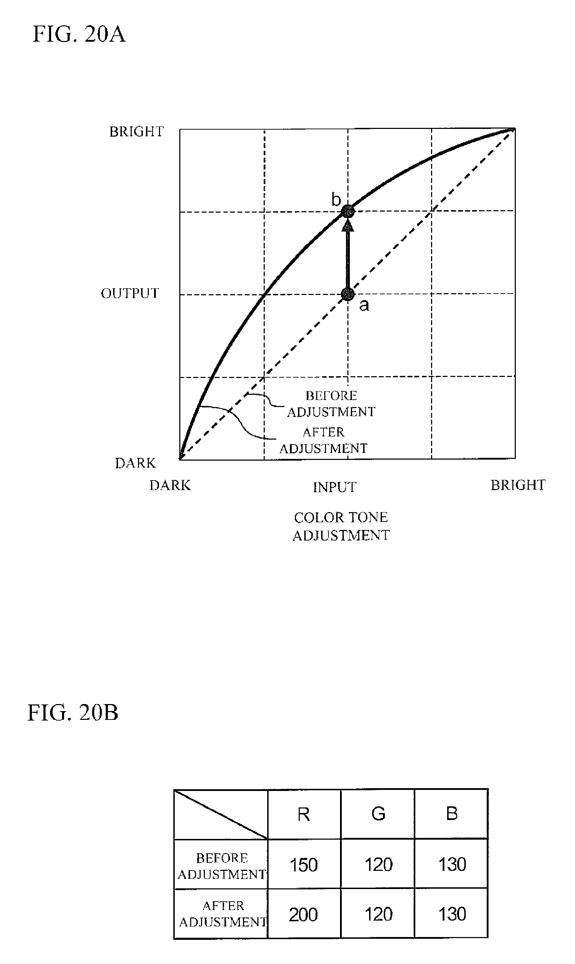

FIG. 17 is a view showing the brightness of an image signal before and after adjustment by the brightness adjusting portion, FIG. 18 is a view showing the brightness of an image signal before and after adjustment by the contrast adjusting portion, FIG. 19 is a view showing the brightness of an image signal before and after adjustment by the gamma value adjusting portion, and FIG. 20 is a view showing the brightness of an image signal before and after adjustment by the color tone adjusting portion.
Each of brightness adjusting portions 52 of the first image quality adjusting circuit 50A and the second image quality adjusting circuit 50B adjusts the brightness of the image signal, so that, as shown in FIG. 18, the brightness of the image signal can be generally adjusted from a dark area to a bright area.

When the contrast adjusting portion 51 adjusts the contrast of the image signal accordingly so as to increase the contrast of the image signal, as shown in FIG. 18, the bright area becomes brighter, and the dark area becomes darker. Therefore, the contrast adjustment can change the brightness of the image signal, and enable to control the visible ranges K1 and K2.

When the gamma value adjusting portion 54 adjusts a gamma value of the image signal, as shown in FIG. 19A, an intermediate brightness of the image signal changes. At this time, the brightness with respect to all of RGB signals changes. For instance, as shown in FIG. 19B, when brightness data values of the RGB signals before the adjustment are (150, 120, 130) (point a in FIG. 19A), the brightness data values after the adjustment change to (200,160,175) (point b in FIG. 19A). Therefore, the gamma value adjustment can change the brightness of the image signal, and enables control of the visible ranges K1 and K2.

The color tone adjusting portion 53 adjusts a color tone of the image signal, as shown in FIG. 20A, and the intermediate brightness of the image signal changes accordingly. At this time, the brightness with respect to one of the RGB signals changes. For instance, when brightness data values of the RGB signals before the adjustment is (150, 120, 130) (point a in FIG. 20A), the brightness data values after the adjustment change to (200, 120, 130) (point b in FIG. 20A), and the brightness of the R signal increases, so that the image after the adjustment takes on a reddish tinge generally. Therefore, the color tone adjustment can change the brightness of the image signal, and enables control of the visible ranges K1 and K2.

As described above, by any one of the brightness adjustment, the contrast adjustment, the gamma value adjustment, and the color tone adjustment, or any combination thereof, the brightness adjustment of the first image IM1 and the second image IM2 is enabled.

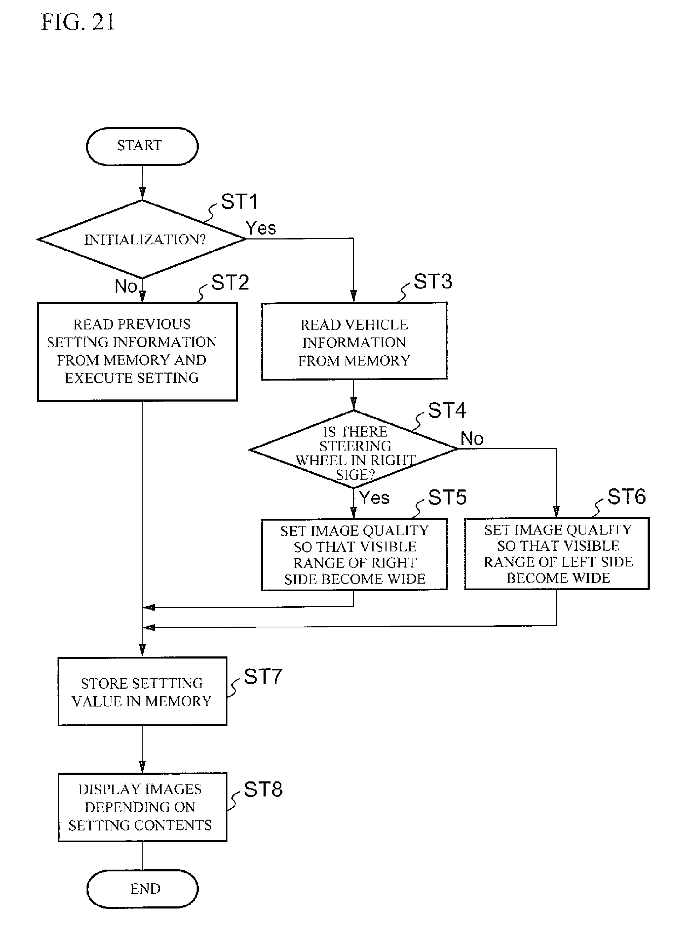

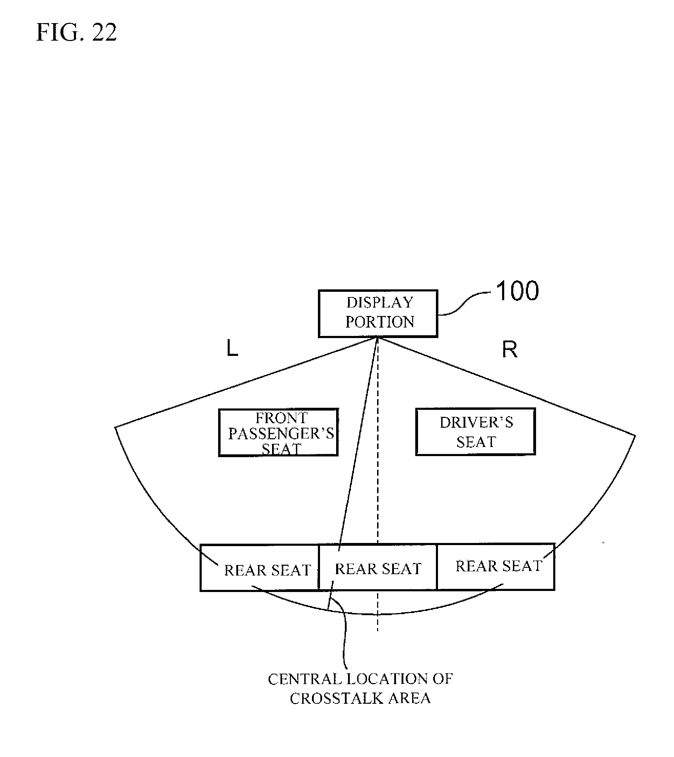

Next, a description will be given, with reference to FIGs. 21 and 22, of an example of an initialization process of the visible ranges of the display portion 100 on the basis of image quality adjustment by the controller 20.
Here, FIG. 21 is a flowchart showing an example of an initialization process of the visible ranges by the controller 20, and FIG. 22 is a view describing the visible ranges at the time of the initialization.
First, the controller 20, as shown in FIG. 21, determines whether the visible ranges K1 and K2 are set for the first time (step ST1). When a setting process for the visible ranges K1 and K2 has been executed already, the controller 20 reads previous setting information from the memory 140, and executes a setting of the visible ranges K1 and K2 according to the setting information (step ST2).

On the other hand, when a setting process for the visible ranges K1 and K2 is executed for the first time, the controller 20 reads the vehicle information stored in the memory 140 (step ST3). The vehicle information includes information about the steering wheel position of the vehicle, information indicative of relationship between the display portion 100 and the driver's seat, and so on.

When the controller 20 reads the vehicle information from the memory 140, the controller 20 determines whether the steering wheel position of the vehicle (driver's seat) exists in the right side (step ST4). When the steering wheel position exists in the right side, the controller 20, as shown in FIG. 20, moves the central location of the crosstalk from the center to the right side, sets image quality so that the visible range of the right side of the display portion 100 becomes wider than that of the left side (step ST5). The adjustment values that are necessary for image quality setting of this time are stored beforehand in memory 140.
On the other hand, when the steering wheel position exists in the left side, the controller 20 sets image quality so that the visible range of the left side of the display portion 100 becomes wider than that of the right side (step ST6).

Next, the controller 20 stores setting value information for image quality and the like in the memory 140 (step ST7).
The controller 20 then displays the first and the second images depending on setting contents on the display portion 100 (step ST8).

Thus, in an initial state, the controller 20 provides a control so that the visible range of the driver's seat side spreads out depending on the vehicle conditions such as the position of the driver's seat. Therefore, a sufficient visible range of the driver's seat side can be secured.

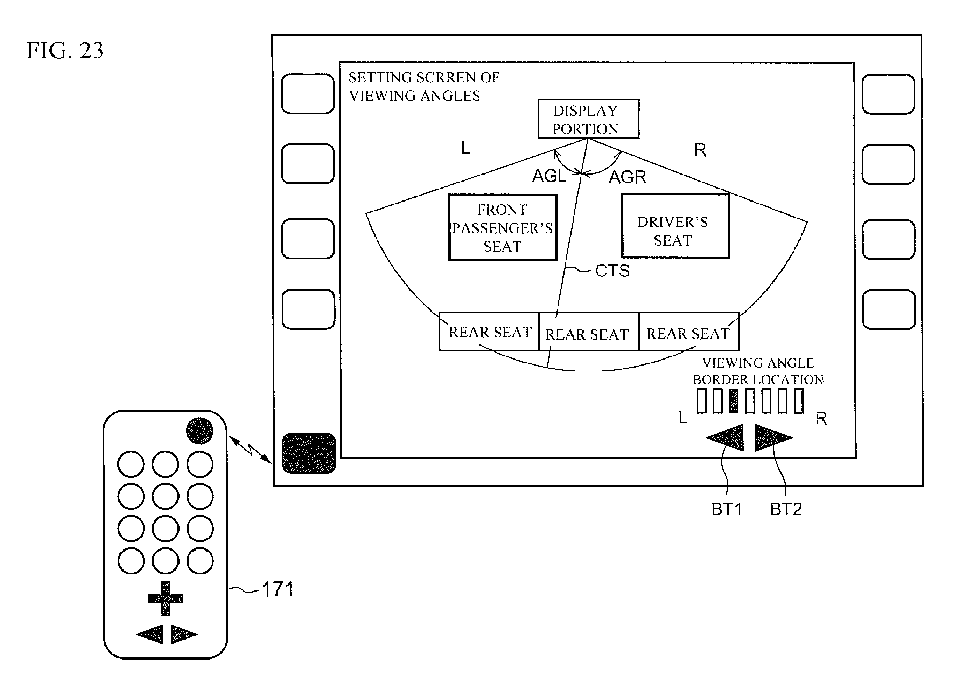

Next, FIG. 21 shows an example of a setting screen to set visible ranges by manual operation.
Here, the angle that is delimited by the above-described visible range K1 or K2 and the central location of the crosstalk area CR is defined as a viewing angle. In the following explanation, the control of the visible range and the control of the viewing angle are used synonymously each other.
The controller 20 displays a setting screen, e.g., as shown in FIG. 23, on the display screen of the display portion 100 in setting the visible ranges.
As shown in FIG. 23, on the setting screen, a viewing angle AGR of the driver's seat side and a viewing angle AGL of the front passenger's seat side, which are delimited by a viewing angle border location CTS that is the central location of the crosstalk area, are displayed so that a user can recognize them visually. That is, the viewing angles AGR and AGL, which are defined depending on the above-described visible ranges of the driver's seat side and the front passenger's seat side, are made as figures and displayed, so that the user can grasp states of the current viewing angles (visible ranges) easily.
On the setting screen, buttons BT1 and BT2 for changing the viewing angles AGR and AGL are displayed. By touching the button BT1 or BT2, a signal from the touch panel 130 is input to the controller 20, and changing control of the viewing angles AGR and AGL is executed. That is, the viewing angles AGR and AGL can be changed by manual operation.
It should be noted that the change of the viewing angles by manual operation is possible with the remote controller 171 in FIG. 23 or the operation portion 150.

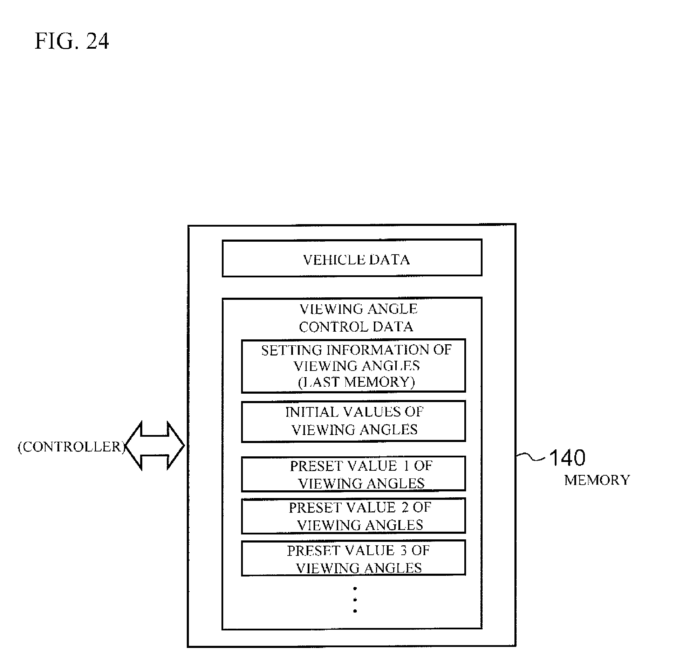

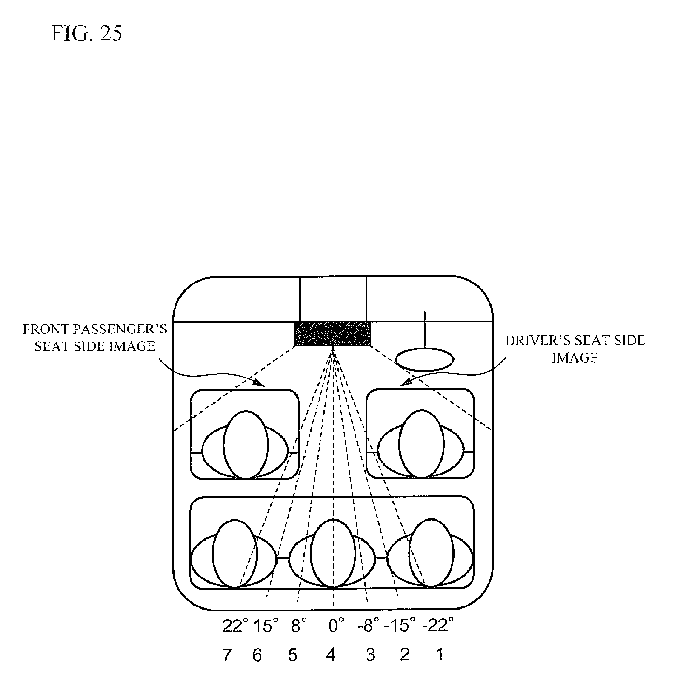

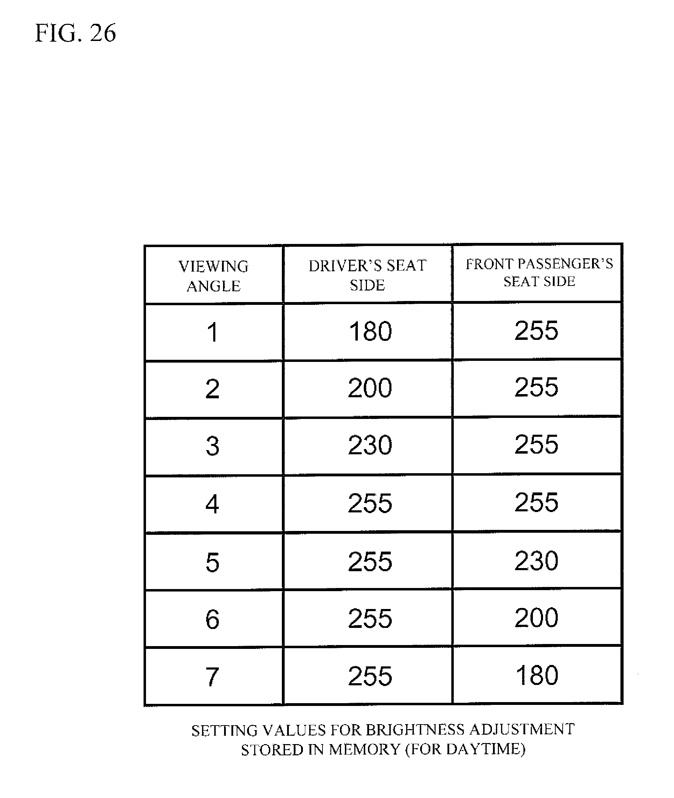

Next, a description will be given, with reference to FIG. 24 through FIG. 26, of an example of data memorized in the memory 140 and implemented for controlling the viewing angles by the controller 20.
Here, FIG. 24 is a view describing an example of data memorized in the memory 140, FIG. 25 is a view describing setting values of the viewing angles, FIG. 26 is a view showing an example of setting values for the brightness adjustment of the driver's seat side and the front passenger's seat side set in accordance with the viewing angles.
As shown in FIG. 24, vehicle type data peculiar to each vehicle such as information pinpointing the steering wheel position, vehicle data composed of equipment data, and various data for control of the viewing angles are stored in the memory 140.
The viewing angle control data includes, for instance, setting information of the viewing angles (last memory) set in the previous control of the viewing angles, initial values of the viewing angles, preset values of the viewing angles, and so on.
The preset values of the viewing angles are, for instance, brightness adjustment values of the driver's seat side and the front passenger's seat side corresponding to each of the viewing angles 1 to 7, as shown in FIG. 26. For example, each of the viewing angles 1 to 7 is set between the driver's seat side and the front passenger's seat side, as shown in FIG. 25.
It can be considered that the preset values of the viewing angles are, for instance, values corresponding to the brightness for day or night around the display portion 100, values corresponding to the types of image sources to be displayed, values corresponding to the number of the passengers in the vehicle or the seating positions of the passengers, and so on.
Moreover, the memory 140 stores, for instance, setting information allowing or disallowing the change of the viewing angles depending on the change of sources, passenger information, and so on.
It is preferred that the memory 140 is composed of a nonvolatile memory such as a flash EEPROM.

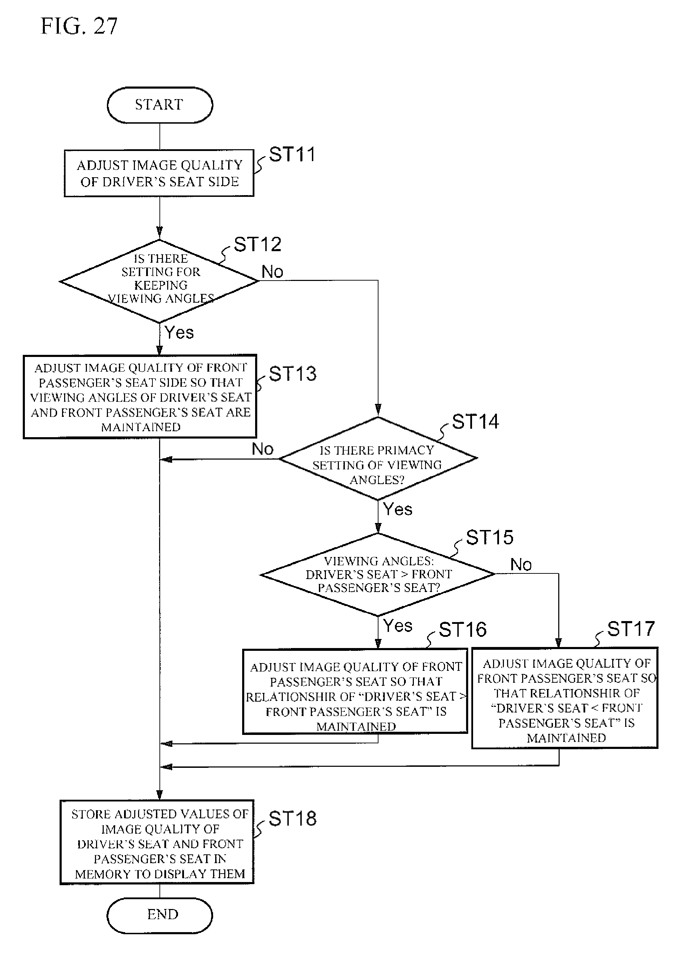

Next, a description will be given, with reference to FIG. 27, of an example of a viewing angle control process by the controller 20.
The controller 20 detects that the user has adjusted the image quality of the driver's seat side of the display portion 100 to user's preference (step ST11), and then determines whether the setting information of the memory 140 is the setting that the viewing angles should be maintained to uniformity (step ST12).

When the setting information of the memory 140 is the setting that the viewing angles should be maintained to uniformity, the controller 20 executes the image quality adjustment of the screen in which the user does not change the image quality, and controls the viewing angles so that the viewing angles are maintained in predetermined values (step ST13).

When the setting information of the memory 140 is not the setting that the viewing angles should be maintained to uniformity, the controller 20 determines whether the setting information of the memory 140 includes primacy setting of the viewing angles. The primacy setting of the viewing angles is a setting to let one of the viewing angles spread than the other thereof.
When the setting information of the memory 140 includes primacy setting of the viewing angles, the controller 20 determines which of the viewing angles is set widely in the primacy setting (step ST15), and executes the image quality adjustment depending on the result of the determination (steps ST16 and ST17).
The controller 20 stores the adjusted values of the image quality in the memory 140, and the process is completed (step ST18).
By executing the above-described process, when the image quality of one screen of the display portion 100 is changed by the user, it is possible to prevent or restrain the viewing angles (visible ranges) from changing.

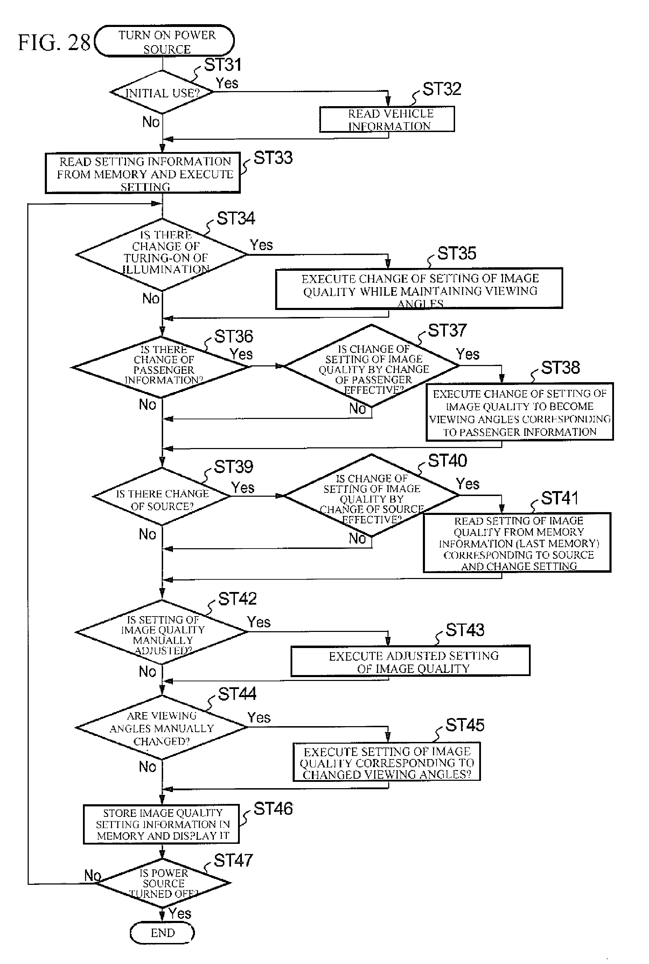

Next, a description will be given, with reference to FIG. 28, of another example of the viewing angle control process by the controller 20.
As shown in FIG. 28, when the power supply of the display apparatus is turned on, the controller 20, first, executes a process similar to the initialization process described in FIGs. 21 and 22 (steps ST31 to ST33).

Next, the controller 20 determines whether illuminations in the vehicle are turned on (step ST31). Whether the illuminations in the vehicle are turned on can be determined from a detection signal of the brightness detecting sensor 190, a state of a switch turning on/ off the illuminations, and so on.

When the illuminations are turned on, the controller 20 controls the viewing angles so that the viewing angles are maintained by the image quality adjustment based on data stored in the memory 140 (step ST35). This prevents the viewing angles from changing according to the change of the brightness around the display portion 100 by turning on the illuminations.
When the illuminations are not turned on, the controller 20 determines whether the passenger information (the seating positions of the passengers, etc) is changed based on a detection signal of the passenger detecting sensor 200 (step ST36).

When the passenger information is changed, the controller 20, first, determines whether the change of the viewing angles is allowed according to the change of the passenger information from information and the like stored in the memory 140. When the change of the viewing angles is allowed, the controller 20 adjusts the image quality based on data stored in the memory 140 so as to set the viewing angles according to the passenger information (step ST38).

Next, the controller 20 determines whether a source supplying images to the display portion 100 is changed (step ST39). When the source is changed, the controller 20 determines whether the change of the viewing angles is allowed according to the change of the source based on data stored in the memory 140 (step ST40). When the change of the viewing angles is allowed, the controller 20 adjusts the image quality so that the viewing angles are maintained to uniformity according to the changed source (the type of a supply source supplying images) (step ST41).

Then, the controller 20 determines whether the user executes the image quality adjustment manually (step ST42). When the user executes the image quality adjustment manually, the controller 20 executes the image quality adjustment according to the operation (step ST43). At this time, the controller 20 may control the viewing angles so that the viewing angles are maintained to uniformity, as described in FIG. 26.

Then, the controller 20 determines whether the user changes the viewing angles manually (step ST44). When the user changes the viewing angles manually, the controller 20 executes the image quality adjustment according to the viewing angles to be changed, based on data stored in the memory 140 (step ST45).

Next, the controller 20 stores information relating to the image quality adjustment in the memory 140. Further, the controller 20 can display, for instance, the changed viewing angles and the changed values of the image quality adjustment on the display screen of the display portion, as shown in FIG. 23 (step ST46).
Then, the controller 20 determines whether the power supply of the display apparatus is turned off (step ST47). When the power supply of the display apparatus is not turned off, the process returns to step ST34 to repeat the above-described process.

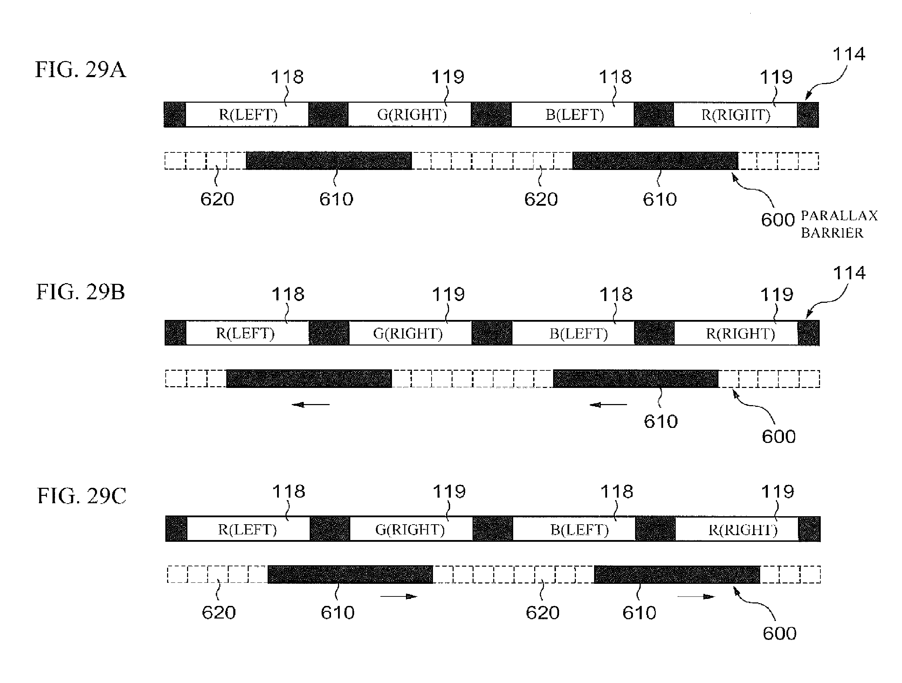

In the above-described exemplary embodiment, the parallax barrier 115 for a stationary type in the display portion 100 is implemented, but it is not limited to this, and a mobile parallax barrier composed of liquid crystal, and so on can be implemented.
For example, as shown in FIG. 29, a mobile parallax barrier 600 is arranged in opposed relation to a color filter substrate 114. The mobile parallax barrier 600 includes light shielding portions 610 and translucence portions 620 formed by liquid crystal. The light shielding portions 610 and the translucence portions 620 operate simultaneously each other.

In a liquid crystal panel to which the mobile parallax barrier 600 is applied, when the centerline of the crosstalk area is set at a direction perpendicular to the display screen, the light shielding portions 610 and the translucence portions 620 are arranged as shown in FIG. 29A. When the centerline of the crosstalk area is inclined to the left side, the light shielding portions 610 and the translucence portions 620 are moved to the left side, as shown in FIG. 29B. When the centerline of the crosstalk area is inclined to the right side, the light shielding portions 610 and the translucence portions 620 are moved to the right side, as shown in FIG. 29C.
This makes it possible to execute the viewing angle control, and it is also possible to execute the viewing angle control by using the mobile parallax barrier 600 and the above-described image quality adjustment together. That is, when the viewing angles are coarsely adjusted with the mobile parallax barrier 600, and the viewing angles are finely adjusted by the image quality adjustment, it is possible to execute more accurate viewing angle control.

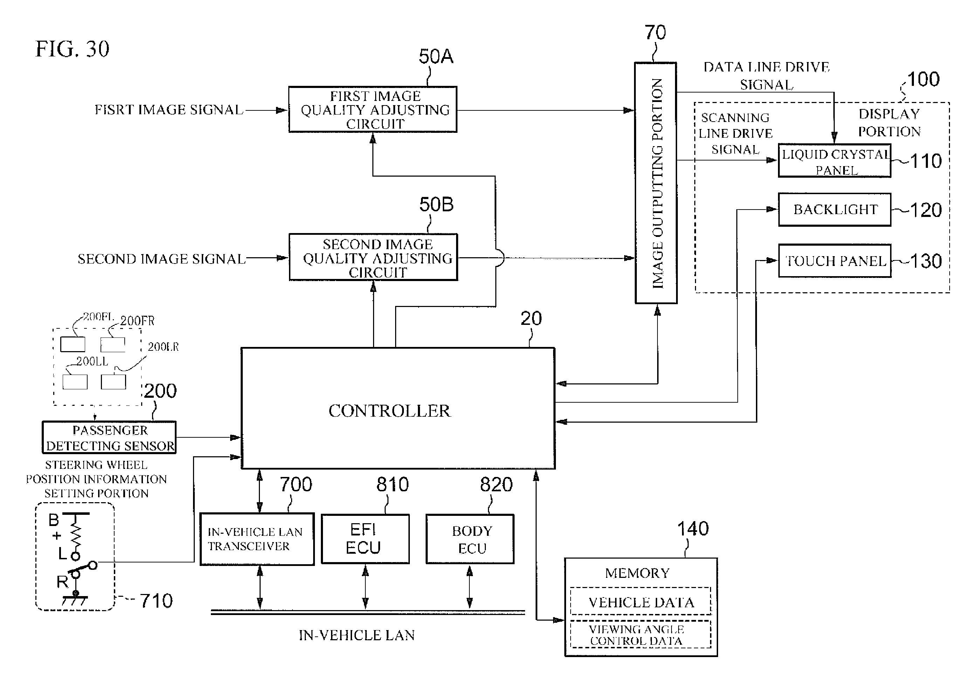

FIG. 30 is a view showing an example of a system configuration when viewing angle control data is generated based on the vehicle information, and the image quality adjustment is executed based on the generated viewing angle control data.
As shown in FIG. 30, the passenger detecting sensor 200, a steering wheel position information setting portion 710, an in-vehicle LAN transceiver 700, and so on are connected to the controller 20.
The controller 20 obtains various vehicle information such as driving information of the vehicle from various controlling devices via an in-vehicle LAN (Local Area Network). The various controlling devices for controlling the vehicle such as an engine controlling device (EFI ECU) 810 and a body controlling device (Body ECU) 820 are connected to the controller 20 by the in-vehicle LAN transceiver 700 and the in-vehicle LAN (Local Area Network). Moreover, the controller 20 also obtains the various vehicle information from the passenger detecting sensor 200, the steering wheel position information setting portion 710, and so on. For instance, the EFI ECU 810 and the Body ECU 820 store vehicle ID data peculiar to each vehicle, and therefore generate the viewing angle control data which is most suitable for corresponding vehicle based on the vehicle ID. The controller 20 may detect the passenger information (seating position) in real time with sensors 200FR to 200LL provided in respective seats, and control the viewing angles. Further, the steering wheel position information setting portion 710 composed of a switch is installed, the steering wheel position information setting portion 710 outputs a high level signal to the controller 20 when the steering wheel is in the left, and the steering wheel position information setting portion 710 outputs a low level signal to the controller 20 when the steering wheel is in the right, and hence the controller 20 may generate the viewing angle control data.
Then, the controller 20 generates the viewing angle control data from the obtained vehicle information, and stores the vehicle information and the viewing angle control data in the memory 140. When the viewing angle control is executed, the controller 20 reads the viewing angle control data, and outputs control signals to the first image quality adjusting circuit 50A, and the second image quality adjusting circuit 50B to execute the image quality adjustment.
With this configuration, it is possible to execute the most suitable viewing angle control based on various vehicle information.

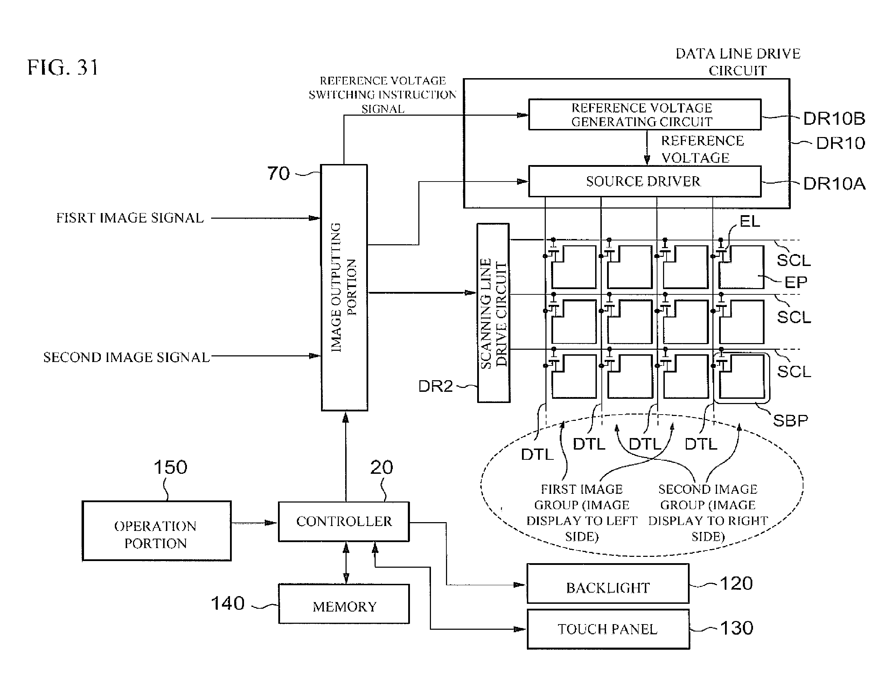

FIG. 31 is a view describing another example of the image quality adjustment for the viewing angle control.
In FIG. 31, a data line driving circuit DR10 includes a source driver DR10A driving data lines DTL, and a reference voltage generating circuit DR10B outputting a reference voltage to the source driver DR10B.
A reference voltage switching instruction signal is input from the image outputting portion 70, so that the reference voltage generating circuit DR10B changes the reference voltage output to the source driver DR10B.
The controller 20 receives an instruction for controlling the viewing angles from the operation portion 150, the memory 140, the touch panel 130, or the like, and outputs a viewing angle control signal in response to the instruction to the image outputting portion 70. In accordance with this viewing angle control signal, the image outputting portion 70 generates the reference voltage switching instruction signal in synchronization with a display timing of each image, i.e., a driving timing of the data lines.
Thus, in the first exemplary embodiment, the reference voltage of the liquid crystal panel 110 is changed, so that the operation of the liquid crystal is controlled to adjust the image quality.
In the first exemplary embodiment, although the above description is made by referring to the case where the reference voltage of the data line driving circuit DR10 driving the liquid crystal panel 110 is changed to adjust the image quality, this is not limitative to the present invention, and for example, it is possible to provide two backlights corresponding to the respective left-hand side display pixels and right-hand side display pixels and execute the image quality adjustment. Further, the present invention is not limited to these, and can implement other methods for the image quality adjustment.

In the above-described exemplary embodiment, although the above description is made by referring to the case where the display portion 100 is arranged in the vicinity of the dashboard of the vehicle, this is not limitative to the present invention. When rear display portions are provided in the vicinity of the rear seats, the same viewing angle control as described above can be applied to the rear display portions.

In the above-described exemplary embodiment, although the above description is made by referring to the case where the liquid crystal panel is implemented as the display portion 100, this is not limitative to the present invention, and a flat panel display other than the liquid crystal panel, e.g. an organic light emitting display panel, a plasma display panel, a cold-cathode flat panel display panel, and so on can be also implemented.

In the above-described exemplary embodiment, although the above description is made by referring to the case where the first image data and the second image data are synthesized in the VRAM 73, and corresponding pixels of the liquid crystal panel are driven by the common liquid crystal panel driving portion, it is possible to use a construction where the liquid crystal panel driving portion is provided for each image data, and drives corresponding pixels of the liquid crystal panel without synthesizing the first image data and the second image data. Moreover, with reference to pixel structure of the liquid crystal panel, other pixel structure can be also adopted.

In the above-described exemplary embodiment, although the above description is made by referring to the case where the viewing angles are made as figures and displayed, this is not limitative to the present invention, and for example, the viewing angles (visible ranges) and the central location of the crosstalk area can be made as numerical values and displayed.

### (Second exemplary embodiment)

Next, a description will be given of a display apparatus and a display method thereof according to another exemplary embodiment of the present invention.
In a general navigation apparatus, in order to raise the visibility of a navigation image depending on the neighboring brightness where the display portion is set up, changing the brightness of the navigation image is executed depending on turning on/off illuminations such as the head lamps provided in the vehicle. That is, when the inside of the vehicle is bright, a relatively bright daytime image (an image for bright time) is displayed, when the inside of the vehicle is dark, a relatively dark nighttime image (an image for dark time) is displayed depending on the darkness.
However, in the multi-view display apparatus, when the navigation image is displayed on the driver's seat side, and the illumination switch is turned on in a state where an image other than the navigation image such as a DVD (digital versatile disc) is displayed on the front passenger's seat side, the navigation image displayed on the driver's seat side is changed from a bright state (a daytime image (an image for bright time)) to a dark state (a nighttime image (an image for dark time)).
At this time, since the brightness of the image other than the navigation image displayed on the front passenger's seat side is not changed, a difference of the brightness between the navigation image of the driver's seat side and the image other than the navigation image of the front passenger's seat side spreads, so that a so-called crosstalk phenomenon occurs, and there is a possibility that the image of the front passenger's seat side is reflected in the navigation image of the driver's seat side.

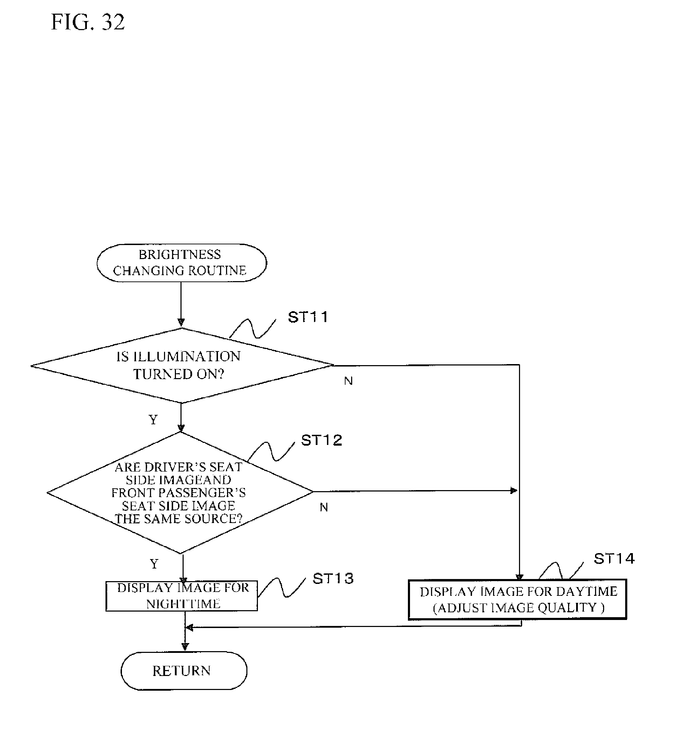

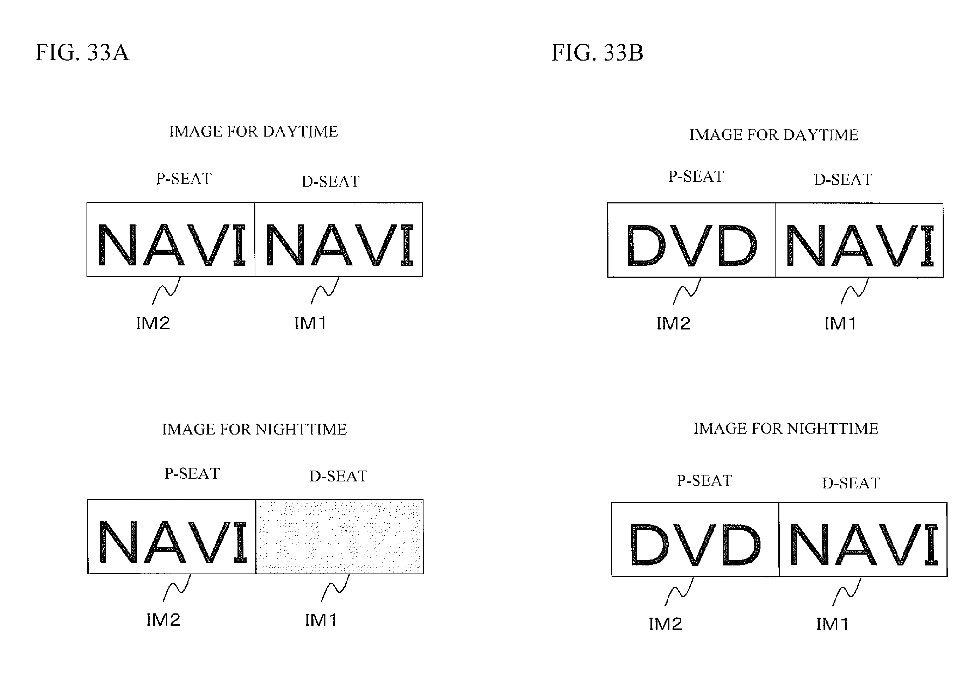

Therefore, in the second exemplary embodiment, a description will be given, with reference to FIGs. 32 and 33, of the display apparatus and the display method thereof which can solve this problem. It should be noted that the hardware configuration of the display apparatus according to the second exemplary embodiment is the same as that of the display apparatus according to the first exemplary embodiment.

In view of the characteristic of the crosstalk as described above, the controller 20 executes a brightness changing process, as shown in FIG. 32. It should be noted that, in the second exemplary embodiment, a description will be given of the case where the navigation image is displayed as the driver's seat side image IM1, and the navigation image or the DVD image is displayed as the front passenger's seat side image IM2. Moreover, this process is repeatedly executed during operation of the in-vehicle display apparatus.
The controller 20, first, determines whether the illumination switch 210 is turned on (step ST11). The illumination switch 210 is turned on, so that it can be determined that night illumination is necessary and the inside of the vehicle is dark.

When the illumination switch 210 is turned off, the controller 20 displays the driver's seat side image IM1 with brightness for the daytime (step ST14). Specifically, the controller 20 adjusts the image quality so that the driver's seat side image becomes relatively bright based on a preset setting value for the daytime from the memory 140, as shown in the upper sides of FIGS. 33A and 33B.

On the other hand, when the illumination switch 210 is turned on, the controller 20 determines whether the driver's seat side image IM1 and the front passenger's seat side image IM2 are supplied from the same source (navigation portion) (step ST12). When they are supplied from the same source, the controller 20 displays the driver's seat side image IM1 with brightness for the nighttime (step ST13). Specifically, the controller 20 adjusts the image quality so that the driver's seat side image becomes relatively dark based on a preset setting value for the nighttime from the memory 140, as shown in the bottom sides of FIGs. 33A and 33B. At this time, if the driver's seat side image IM1 consisted of the navigation image is darkened, the driver's seat side image IM1 and the front passenger's seat side image IM2 are the same navigation images. Therefore, if the front passenger's seat side image IM2 is reflected in the driver's seat side image IM1, there is not so big a problem, and it is difficult to reduce the visibility of the driver's seat side image IM1.

In step ST2, when the driver's seat side image IM1 is the navigation image and the front passenger's seat side image IM2 is the DVD image, the driver's seat side image IM1 is displayed based on the above-described setting value for the daytime (step ST14). That is, the driver's seat side image IM1 and the front passenger's seat side image IM2 are different source images, the brightness of the driver's seat side image IM1 for the daytime and the nighttime does not change, and the brightness is maintained to uniformity.

According to the second exemplary embodiment as described above, when in the multi-view display apparatus, the brightness of the driver's seat side image IM1 is adjusted depending on the brightness of the inside of the vehicle and the turning on/off of the illumination switch, the front passenger's seat side image IM2 is reflected in the driver's seat side image TM1 by considering the source of the front passenger's seat side image IM2, and it is therefore possible to prevent the reduction of visibility of the driver's seat side image IM1.

In the above-described exemplary embodiment, although the above description is made by referring to the case where the brightness of the driver's seat side image IM1 is changed in two steps of the brightness for the daytime and the nighttime depending on the turning on/off of the illumination switch 210, the present invention is not limited to this. For example, in place of the illumination switch 210, the brightness detecting sensor 190 and the like sequentially detect the change of the brightness of the inside of the vehicle, the brightness of the driver's seat side image IM1 can be changed in many steps or in series according to the detection results.
Moreover, it can be configured such that a raindrop sensor detecting the weather is provided in the vehicle, or a communication means is provided to obtain weather information from the outside, and the brightness of the image is adjusted according to the current weather. In a situation of the rainy or cloudy weather, the surroundings of the vehicle are gloomy, so that the brightness of the driver's seat side image and the front passenger's seat side image is outstanding from fine weather time. Therefore, when the brightness difference is large, it is also possible to adjust the brightness at the time of the rainy or cloudy weather. In addition, when it is determined that there is the vehicle in a dark place such as a tunnel or closed-in parking lot based on location information from the navigation portion 370, it is also possible to adjust the brightness of the image.

In the above-described exemplary embodiment, although the above description is made by referring to the configuration to adjust the driver's seat side image IM1 in the preset brightness for the daytime when the sources of the driver's seat side image IM1 and the front passenger's seat side image IM2 are different, the present invention is not limited to this, and it is possible to adjust the brightness of the driver's seat side image IM1 according to the types of the source of the front passenger's seat side image IM2.
In addition, it is possible to adjust the brightness of the images of the driver's seat side and the front passenger's seat side, or any one of the brightness of the images, according to the types of the sources of the driver's seat side image IM1 and the front passenger's seat side image IM2. For instance, when the image of the front passenger's seat side is dark, and the image of the driver's seat side is bright, it is possible to increase the brightness of the front passenger's seat side image, decrease the brightness of the driver's seat side image, or adjust the balance of the brightness of both images.

In the above-described exemplary embodiment, although the above description is made by referring to the case where the navigation image is displayed as the driver's seat side image IM1, the present invention is not limited to this, and can be also applied in the case of the DVD image and the TV image.

In the above-described exemplary embodiment, although the above description is made by referring to the case where the brightness of the image is adjusted, the present invention is not limited to this. For instance, the brightness of the image is not simply adjusted, and it is possible to selectively display the navigation image for the bright time when surroundings are bright, and the navigation image for the dark time when surroundings are dark according to, e.g. the brightness of the surroundings. In the navigation image for the bright time and the navigation image for the dark time, the respective images are different by changing their tints, for example. The navigation image for the bright time is an easily viewable image at the bright time, and the navigation image for the dark time is an easily viewable image at the dark time.
Specifically, based on a switching signal indicative of a state of the brightness of the surroundings, which is composed of a signal of the illumination switch 210 and the like, the navigation image for the bright time is caused to be displayed when the surroundings of the display portion 100 are bright, and the navigation image for the dark time is caused to be displayed when the surroundings are dark. And when only one of the first image IM1 and the second image IM2 displayed on the display portion 100 is the navigation image, it can be configured such that the navigation image for the bright time is caused to be displayed as the navigation image, and the switchover between the navigation image for the bright time and the navigation image for the dark time is limited, regardless of (change of the state of) the switching signal composed of the signal of the illumination switch 210 and the like.

In the above-described exemplary embodiment, although the above description is made by referring to the case where the liquid crystal panel is implemented for the display portion 100, the present invention is not limited to this, and for example, the organic light emitting display panel, the plasma display panel, the cold-cathode flat panel display panel, and so on can be implemented.

The above-mentioned embodiments are exemplary preferred embodiments. The present invention is not limited to the above embodiments but various variations may be made without departing from the present invention.

## Claims

1. A display apparatus comprising:
display means that displays individual images for at least two visible ranges on the same screen; and
display control means that adjusts an output condition of the single individual image to control the visible range of the single individual image.

2. The display apparatus as claimed in claim 1, wherein the display control means adjusts the image quality of the single individual image as the output condition of the single individual image.

3. The display apparatus as claimed in claim 2, wherein the display control means controls the visible range of the single individual image so that the visible range of the single individual image is maintained to uniformity according to brightness of surroundings of the display means.

4. The display apparatus as claimed in claim 2, wherein the display control means controls the visible range of the single individual image so that the visible range of the single individual image becomes wider than the visible range of another individual image.

5. The display apparatus as claimed in claim 2, wherein the display control means adjusts the visible range of the single individual image together with the image quality of the another individual image.

6. The display apparatus as claimed in claim 2, wherein when the image quality of the single individual image is adjusted, the display control means adjusts the image quality of the another individual image so that the visible range of the another individual image maintains a state before adjustment of the image quality of the single individual image.

7. The display apparatus as claimed in claim 2, wherein the display control means adjusts at least one of brightness, contrast, color tone, and gamma value as the adjustment of the image quality.

8. The display apparatus as claimed in claim 2, wherein the display control means controls the visible range according to an instruction input from the outside.

9. The display apparatus as claimed in claim 2, wherein the display control means adjusts the image quality according to a type of a supply source supplying the single individual image.

10. The display apparatus as claimed in claims 1 to 9, wherein the display control means displays the visible range of the single individual image on the display means.

11. The display apparatus as claimed in claim 1, further comprising detection means that detects brightness of surroundings of the display means,
wherein the display control means controls the image quality or display form of the single individual image as a output state based on the detection results of the detection means,
when supply sources supplying the single individual image and the another individual image are the same, the display control means executes the adjustment of the image quality of the single individual image or change of the display form of the single individual image based on the detection results of the detection means, and
when the supply sources supplying the single individual image and the another individual image are different, the display control means does not execute the adjustment of the image quality of the single individual image or change of the display form of the single individual image based on the detection results of the detection means.

12. The display apparatus as claimed in claim 11, wherein the detection means detects the brightness of surroundings of the display means based on an operation state of a illumination switch controlling illuminations of a vehicle.

13. The display apparatus as claimed in claim 11, wherein when the illumination switch is turned off, the display control means sets the single individual image to brightness for daytime display,
when the illumination switch is turned on, and the supply sources supplying the single individual image and the another individual image are the same, the display control means sets the single individual image to brightness for nighttime display, and
when the illumination switch is turned on, and the supply sources supplying the single individual image and the another individual image are different, the display control means sets the single individual image to brightness for daytime display.

14. The display apparatus as claimed in claim 11, wherein when the supply sources supplying the single individual image and the another individual image are a navigation apparatus, the display control means switches the single individual image back and forth between a navigation image for dark time and a navigation image for bright time, based on the detection results of the detection means, and
when the supply source supplying the single individual image is the navigation apparatus, and the supply source supplying the another individual image is other apparatus other than the navigation apparatus, the display control means does not execute the change of the display form of the single individual image based on the detection results of the detection means.

15. A display method of a display apparatus comprising the steps of:
displaying individual images for at least two visible ranges on the same screen; and
adjusting an output condition of the single individual image to control the visible range of the single individual image.

16. The display method of the display apparatus as claimed in claim 15, wherein the image quality of the single individual image is adjusted as the output condition of the single individual image.

17. The display method of the display apparatus as claimed in claim 15, further comprising a step of detecting brightness of surroundings of display means,
wherein when supply sources supplying the single individual image and the another individual image are the same, adjustment of the image quality of the single individual image or change of the display form of the single individual image is executed as the output condition of the single individual image, based on the detected brightness, and
when the supply sources supplying the single individual image and the another individual image are different, adjustment of the image quality of the single individual image or change of the display form of the single individual image is not executed as the output condition of the single individual image, based on the detected brightness.
